# EUROPEAN PATENT SPECIFICATION

(11) **EP 3 200 528 B1**
(45) Date of publication and mention of the grant of the patent: **07.10.2020**
(21) Application number: 15843120.5
(22) Date of filing: 23.07.2015
(51) Int. Cl.: H04W 72/02, H04L 1/08, H04L 5/00, H04W 72/04

(54) **DEVICE-TO-DEVICE COMMUNICATION METHODS AND APPARATUSES**
D2D-KOMMUNIKATION VERFAHREN UND VORRICHTUNGEN
PROCÉDÉS ET DISPOSITIFS À UTILISER DANS UNE COMMUNICATION DE DISPOSITIF À DISPOSITIF

(30) Priority: 25.09.2014 CN 201410499885
(43) Date of publication of application: 02.08.2017
(73) Proprietor: ZTE Corporation, Shenzhen, Guangdong 518057 (CN)
(72) Inventor: WU, Shuanshuan, Shenzhen Guangdong 518057 (CN); LI, Yu Ngok, Shenzhen Guangdong 518057 (CN); YUAN, Yifei, Shenzhen Guangdong 518057 (CN); YANG, Jin, Shenzhen Guangdong 518057 (CN); DAI, Bo, Shenzhen Guangdong 518057 (CN)
(74) Representative: Brunazzi, Stefano
(86) International application number: PCT/CN2015/084953
(87) International publication number: WO 2016/045443

(56) References cited:
- WO-A1-2013/107277
- WO-A1-2013/191518
- WO-A1-2014/092619
- CN-A- 103 024 911
- CN-A- 103 828 398
- US-A1- 2013 322 413
- ERICSSON: "D2D Scheduling Procedure", 3GPP DRAFT; R2-134238 - D2D SCHEDULING PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20131111 - 20131115 13 November 2013 (2013-11-13), XP050736985, Retrieved from the Internet: URL:http://www.3gpp.org/ftp/Meetings_3GPP_ SYNC/RAN/RAN2/Docs/ [retrieved on 2013-11-13]
- ERICSSON: '3GPP TSG-RAN WG1 Meeting #76bis, R1-141390' ON RESOURCE ALLOCATION FOR D2D COMMUNICATION 04 April 2014, XP050787060
- ERICSSON: '3GPP TSG-RAN WG1 Meeting W76bis, R1-141390' ON RESOURCE ALLOCATION FOR D2D COMMUNICATION 04 April 2014, XP050787060
- QUALCOMM INCORPORATED: '3GPP TSG-RAN WG1 #76, R1-140469' RESOURCE ALLOCATION FOR IN NETWORK D2D BROADCAST 14 February 2014, XP050752064
- LG ELECTRONICS: '3GPP TSG RAN WG1 Meeting #76, R1-140330' DISCUSSION ON D2D SYNCHRONIZATION PROCEDURE 14 February 2014, XP050751959
- INTEL CORPORATION: '3GPP TSG RAN WG1 Meeting #76, R1-140130' DISCUSSION ON D2D BROADCAST RESOURCE ALLOCATION 14 February 2014, XP050751809
- ALCATEL -LUCENT ET AL.: '3GPP TSG RAN WG1 Meeting #75, R1-135175' SYNCHRONIZATION DESIGN FOR D2D COMMUNICATION 15 November 2013, XP050750796

## Description

### Technical Field

The present disclosure relates to the field of communications, and in particular to Device-to-Device (D2D) communication methods and apparatuses.

### Background

In a cellular communication system, in order to transmit service data between two pieces of User Equipment (UE), for example, service data from a UE1 to a UE2, first, the service data is transmitted, via an air interface, to a base station (or called a node B or an evolved Node B) of a cell in which the UE1 is located. Then the base station transmits the service data to a base station of a cell in which the UE2 is located through a core network. At last, the base station of the cell in which the UE2 is located transmits the service data to the UE2 via an air interface. The transmission of service data from the UE2 to the UE1 is based on similar processing flow.

However, the foregoing cellular communication method is not the best choice when the UE 1 and the UE 2 are located in the same cell and in proximity to each other. Actually, as mobile communication services become increasingly diversified, for example, as the application of social networks and e-payment to wireless communication systems becomes more and more popular, the demand for service transmission between adjacent users keeps increasing. Thus, a Device-to-Device (D2D) communication mode is attracting more and more attention. D2D communication, which is also called Proximity Service (ProSe), refers to the direct transmission of service data from a source UE to a target UE via an air interface, involving no base stations or core network for data forwarding. For users involved in the proximity communication, D2D not only saves radio spectrum resource but also reduces the workload of a core network in aspect of data transmission.

In cellular communications, an access device (normally, a base station) is generally needed to schedule the data transmission between a UE and a network. For example, a base station indicates, to a UE through a control signaling, scheduled uplink (UL) and downlink (DL) resources for data transmission. The scheduling conducted by the base station guarantees the orthogonality of the resources used by different users, thus avoiding the conflict or interference of signals. In D2D communication, in view of the power level of interference, a sidelink between D2D UEs usually uses an uplink resource for transmission, for example, an uplink frequency band in a Frequency Division Duplex (FDD) system or uplink subframes in a Time Division Duplex (TDD) system. In this case, the scheduling of D2D links may be significantly different from the scheduling conducted in a conventional cellular communication system. Especially in a TDD system, because Long Term Evolution (LTE) TDD has 7 uplink-downlink (UL-DL) configurations each of which is different in the ratio of uplink subframes to downlink subframes, which makes it more difficult to schedule D2D communication.

Moreover, in view of the wide application of D2D communication, D2D may need to support the communication in a partial coverage scenario or a non-coverage scenario. The 'partial coverage' refers to that a part of UEs participating in D2D communication may not attain signal coverage of a cellular network, for example, this part of UEs cannot detect a wireless signal sent from a base station, or the level of the wireless signal receiving power of this part of UEs is below a certain threshold, or this part of UEs cannot access a cellular network normally. The 'non-coverage' refers to that each UE participating in D2D communication cannot attain signal coverage of a cellular network. In this case, especially in a TDD system, the determination of a D2D communication resource by a UE is a precondition for the normal conduction of a D2D communication.

The U.S. Patent Application US2013/0322413 A1 describes methods to enable scheduling and control of direct link communication in cellular communication systems.

### Summary

The invention is defined by the appended independent claims and further embodiments are described by the dependent claims. Any reference to inventions or embodiments not falling within the scope of the independent claims are to be interpreted as examples useful for understanding the invention. Some embodiments of the present disclosure provide D2D communication methods or apparatuses to at least address the scheduling problem existing in the direct communication of D2D UEs on the radio resource of a cellular communication system in the related art.

In accordance with an embodiment of the present disclosure, a D2D communication method is provided. In the D2D communication method, a first resource set for transmitting D2D control information is determined according to a received D2D resource configuration parameter and/or stored radio resource pre-configuration information; a second resource for transmitting D2D data is determined; and D2D control information is sent in the first resource set and/or D2D data is sent in the second resource.

In the embodiment, the second resource is determined according to at least one of the following information: received D2D data transmission resource pool configuration information; received transmission resource indication information for D2D data transmission; and the stored radio resource pre-configuration information.

In the embodiment, when a subframe in the first resource set or a subframe for transmitting the D2D control information is overlapped with a subframe in the second resource, only the D2D data is sent in the overlapped subframe. Alternatively, when a subframe in the first resource set or a subframe for transmitting the D2D control information is overlapped with a subframe in the second resource, only the D2D control information is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D data is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D control information is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, the D2D control information and the D2D data are both sent in the overlapped subframe, and only the D2D control information or the D2D data is sent in the overlapped frequency-domain resource. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is orthogonal in position to a frequency-domain resource of the second resource, the D2D control information and the D2D data are both sent in the overlapped subframe.

In the embodiment, sending the D2D data in the second resource includes: determining the number of transmission times of the D2D data; and sending the D2D data according to the determined number of transmission times. The number of transmission times of the D2D data is determined according to at least one of the following information: the UL-DL configuration of a TDD system; a service type; a received signaling indication of the number of transmission times; an index of a resource pattern for transmission of the D2D data; and a resource pattern for transmission of the D2D data.

In the embodiment, when the number of transmission times of the D2D data is determined at least according to the UL-DL configuration of the TDD system, each TDD UL-DL configuration corresponds to one or more values for the number of transmission times.

In the embodiment, when the number of transmission times of the D2D data is determined at least according to the received signaling indication of the number of transmission times, the method further includes the following processing. The signaling indication of the number of transmission times, which is sent from a network-side device and borne in a dedicated radio resource control message or D2D grant information or a broadcast message, is received; or, the signaling indication of the number of transmission times, which is sent from another user equipment and borne in a Physical Sidelink Broadcast Channel (PSBCH) is received. A value for the number of transmission times is sent through the D2D control information.

In the embodiment, when the number of transmission times of the D2D data is determined at least according to the service type, there are N service types which at least include two service types corresponding to different values for the number of transmission times, where N>1; and indication of the service type is sent through the D2D control information.

In the embodiment, when the number of transmission times of the D2D data is determined at least according to the index of the resource pattern for transmission of the D2D data, the method further includes the following processing. Subframe positions of transmission resources are represented by a resource pattern for transmission, each resource pattern for transmission corresponds to more than one index value, and different index values correspond to different values for the number of transmission times; or a plurality of resource pattern sets for transmission are predefined, each resource pattern set for transmission corresponds to one value for the number of transmission times, and resource patterns for transmission included in different resource pattern sets for transmission are indicated by different indexes. The index of the resource pattern for transmission is sent through the D2D control information.

In the embodiment, when the number of transmission times of the D2D data is determined at least according to the resource pattern for transmission of the D2D data, each resource pattern for transmission corresponds to one value for the number of transmission times, and each resource pattern for transmission corresponds to one index value; and an index for indicating the resource pattern for transmission is sent through the D2D control information.

In accordance with an embodiment of the present disclosure, another D2D communication method is provided. In the D2D communication method, a first resource set for transmitting D2D control information is determined according to a received D2D resource configuration parameter and/or stored radio resource pre-configuration information; D2D control information is received in the first resource set, a resource allocation indication parameter for indicating a data resource is included in the D2D control information; and D2D data is received in the data source indicated by the D2D control information.

In the embodiment, when a subframe in the first resource set or a subframe for transmitting the D2D control information is overlapped with a subframe in the data resource, only the D2D data is received in the overlapped subframe. Alternatively, when a subframe in the first resource set or a subframe for transmitting the D2D control information is overlapped with a subframe in the data resource, only the D2D control information is received in the overlapped subframe. Alternatively, when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D data is received in the overlapped subframe. Alternatively, when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D control information is received in the overlapped subframe. Alternatively, when a subframe in the first resource set or a subframe for transmitting the D2D control information is overlapped with a subframe in the data resource, and in the overlapped subframe, a frequency-domain resource of the first resource set is orthogonal in position to a frequency-domain resource of the data resource, the D2D control information and the D2D data are both received in the overlapped subframe.

In the embodiment, receiving the D2D data in the data resource includes: determining the number of transmission times of the D2D data; and receiving the D2D data according to the determined number of transmission times. The number of transmission times of the D2D data is determined according to at least one of the following information: UL-DL configuration of a TDD system; a service type; a received signaling indication of the number of transmission times; an index of a resource pattern for transmission of the D2D data; and a resource pattern for transmission of the D2D data.

In the embodiment, when the number of transmission times of the D2D data is determined at least according to the UL-DL configuration of the TDD system, each TDD UL-DL configuration corresponds to one or more values for the number of transmission times.

In the embodiment, when the number of transmission times of the D2D data is determined at least according to the received signaling indication of the number of transmission times, the method further includes: receiving the signaling indication of the number of transmission times.

In this embodiment, the signaling indication of the number of transmission times is sent from a network-side device and borne in a dedicated radio resource control message or D2D grant information or a broadcast message.

In this embodiment, alternatively, the signaling indication of the number of transmission times is sent from another user equipment and borne in a PSBCH.

In this embodiment, alternatively, the signaling indication of the number of transmission times is sent from a UE which is a sending terminal of the D2D data, and is borne in the D2D control information.

In the embodiment, when the number of transmission times of the D2D data is determined at least according to the index of the resource pattern for transmission of the D2D data, the method further includes the following processing. The index of the resource pattern for transmission of the D2D data is received. In this embodiment, subframe positions of transmission resources are represented by a resource pattern for transmission, one resource pattern for transmission corresponds to more than one index value, and different index values correspond to different values for the number of transmission times.

In the embodiment, alternatively, when the number of transmission times of the D2D data is determined at least according to the index of the resource pattern for transmission of the D2D data, the method further includes the following processing. A plurality of resource pattern sets for transmission are predefined. In this embodiment, each resource pattern set for transmission corresponds to one value for the number of transmission times, and resource patterns for transmission included in different resource pattern sets for transmission are indicated by different indexes.

In the embodiment, when the number of transmission times of the D2D data is determined at least according to the resource pattern for transmission of the D2D data, the method further includes the following processing. A signaling for indicating the index of the resource pattern for transmission of the D2D data is received. In this embodiment, each resource pattern for transmission corresponds to one value for the number of transmission times, and each resource pattern for transmission corresponds to one index value.

In accordance with an embodiment of the present disclosure, still another D2D communication method is also provided. In the D2D communication method, the number of transmission times of a D2D packet is determined; and a signaling indication of the number of transmission times is sent to a UE in at least one of the following ways: sending the signaling indication of the transmission times through a dedicated radio resource control message; sending the signaling indication of the transmission times through D2D grant information; and sending the signaling indication of the transmission times through a broadcast message.

In the embodiment, the number of transmission times of the D2D packet is determined according to at least one of the following information: UL-DL configuration of a TDD system; a service type; received buffer status report information; and a resource pool configuration for D2D communication.

In accordance with another embodiment of the present disclosure, a D2D communication apparatus is provided which includes: a first determination module and a first sending module. The first determination module is arranged to determine, according to a received D2D resource configuration parameter and/or stored radio resource pre-configuration information, a first resource set for transmitting D2D control information, and determine a second resource for transmitting D2D data. The first sending module is arranged to send D2D control information in the first resource set and/or send D2D data in the second resource.

In the embodiment, the second resource is determined according to at least one of the following information: received D2D data transmission resource pool configuration information; received transmission resource indication information for D2D data transmission; and the stored radio resource pre-configuration information.

In the embodiment, when a subframe in the first resource set or a subframe for transmitting the D2D control information is overlapped with a subframe in the second resource, only the D2D data is sent in the overlapped subframe. Alternatively, when a subframe in the first resource set or a subframe for transmitting the D2D control information is overlapped with a subframe in the second resource, only the D2D control information is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D data is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D control information is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, the D2D control information and the D2D data are both sent in the overlapped subframe, and only the D2D control information or the D2D data is sent in the overlapped frequency-domain resource. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is orthogonal in position to a frequency-domain resource of the second resource, the D2D control information and the D2D data are both sent in the overlapped subframe.

In the embodiment, the first determination module is further arranged to determine the number of transmission times of the D2D data. The first sending module is further arranged to send the D2D data according to the determined number of transmission times. The first determination module determines the number of transmission times of the D2D data according to at least one of the following information: UL-DL configuration of a TDD system; a service type; a received signaling indication of the number of transmission times; an index of a resource pattern for transmission of the D2D data; and a resource pattern for transmission of the D2D data.

In the embodiment, when the number of transmission times of the D2D data is determined at least according to the UL-DL configuration of the TDD system, each TDD UL-DL configuration corresponds to one or more values for the number of transmission times.

In the embodiment, when the number of transmission times of the D2D data is determined at least according to the received signaling indication of the number of transmission times, the apparatus further includes a first receiving module. The first receiving module is arranged to receive the signaling indication of the number of transmission times, the signaling indication of the number of transmission times is sent from a network-side device and borne in a dedicated radio resource control message or D2D grant information or a broadcast message. Alternatively, the first receiving module is arranged to receive the signaling indication of the number of transmission times, the signaling indication of the number of transmission times is sent from another user equipment and borne in a PSBCH. A parameter indicating the number of transmission times is included in the D2D control information sent by the first sending module.

In the embodiment, when the number of transmission times of the D2D data is determined at least according to the service type, there are N service types which at least include two service types corresponding to different values for the number of transmission times, where N>1; and a parameter indicating the service type is included in the D2D control information sent by the first sending module.

In the embodiment, when the number of transmission times of the D2D data is determined at least according to the index of the resource pattern for transmission of the D2D data, subframe positions of transmission resources are represented by a resource pattern for transmission, each resource pattern for transmission corresponds to more than one index value, and different index values correspond to different values for the number of transmission times. In the embodiment, alternatively, a plurality of resource pattern sets for transmission are predefined, each resource pattern set for transmission corresponds to one value for the number of transmission times, and resource patterns for transmission included in different resource pattern sets for transmission are indicated by different indexes. The index of the resource pattern for transmission is included in the D2D control information sent by the first sending module.

In the embodiment, when the number of transmission times of the D2D data is determined at least according to the resource pattern for transmission of the D2D data, each resource pattern for transmission corresponds to one value for the number of transmission times, and each resource pattern for transmission corresponds to one index value; and an index for indicating the resource pattern for transmission is included in the D2D control information sent by the first sending module.

In accordance with another embodiment of the present disclosure, another D2D communication apparatus is provided which includes: a second determination module and a second receiving module. The second determination module is arranged to determine, according to a received D2D resource configuration parameter and/or stored radio resource pre-configuration information, a first resource set for transmitting D2D control information. The second receiving module is arranged to receive D2D control information in the first resource set, a resource allocation indication parameter for indicating a data resource is included in the D2D control information. The second receiving module is further arranged to receive D2D data in the data source indicated by the D2D control information.

In the embodiment, when a subframe in the first resource set or a subframe for transmitting the D2D control information is overlapped with a subframe in the data resource, only the D2D data is received in the overlapped subframe. Alternatively, when a subframe in the first resource set or a subframe for transmitting the D2D control information is overlapped with a subframe in the data resource, only the D2D control information is received in the overlapped subframe. Alternatively, when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D data is received in the overlapped subframe. Alternatively, when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D control information is received in the overlapped subframe. Alternatively, when a subframe in the first resource set or a subframe for transmitting the D2D control information is overlapped with a subframe in the data resource, and in the overlapped subframe, a frequency-domain resource of the first resource set is orthogonal in position to a frequency-domain resource of the data resource, the D2D control information and the D2D data are both received in the overlapped subframe.

In the embodiment, the second determination module is further arranged to determine the number of transmission times of the D2D data. The second receiving module is further arranged to receive the D2D data according to the determined number of transmission times. The second determination module is arranged to determine the number of transmission times of the D2D data according to at least one of the following information: UL-DL configuration of a TDD system; a service type; a received signaling indication of the number of transmission times; an index of a resource pattern for transmission of the D2D data; and a resource pattern for transmission of the D2D data.

In the embodiment, when the number of transmission times of the D2D data is determined at least according to the UL-DL configuration of the TDD system, each TDD UL-DL configuration corresponds to one or more values for the number of transmission times.

In the embodiment, when the number of transmission times of the D2D data is determined at least according to the received signaling indication of the number of transmission times, the second receiving module is further arranged to receive the signaling indication of the number of transmission times. The signaling indication of the number of transmission times is sent from a network-side device and borne in a dedicated radio resource control message or D2D grant information or a broadcast message. Alternatively, the signaling indication of the number of transmission times is sent from another user equipment and borne in a PSBCH. Alternatively, the signaling indication of the number of transmission times is sent by a UE which is a sending terminal of the D2D data, and is borne in the D2D control information.

In the embodiment, when the number of transmission times of the D2D data is determined at least according to the index of the resource pattern for transmission of the D2D data, the second receiving module is further arranged to receive the index of the resource pattern for transmission of the D2D data, subframe positions of transmission resources are represented by a resource pattern for transmission, one resource pattern for transmission corresponds to more than one index value, and different index values correspond to different values for the number of transmission times. In the embodiment, alternatively, when the number of transmission times of the D2D data is determined at least according to the index of the resource pattern for transmission of the D2D data, the second receiving module is further arranged to predefine a plurality of resource pattern sets for transmission, each resource pattern set for transmission corresponds to one value for the number of transmission times, and resource patterns for transmission included in different resource pattern sets for transmission are indicated by different indexes.

In the embodiment, when the number of transmission times of the D2D data is determined at least according to the resource pattern for transmission of the D2D data, the second receiving module is further arranged to receive a signaling for indicating the index of the resource pattern for transmission of the D2D data, each resource pattern for transmission corresponds to one value for the number of transmission times, and each resource pattern for transmission corresponds to one index value.

In accordance with another embodiment of the present disclosure, still another D2D communication apparatus is also provided which includes a third determination module and a second sending module. The third determination module is arranged to determine the number of transmission times of a D2D packet. The second sending module is arranged to send a signaling indication of the number of transmission times to a UE in at least one of the following ways: sending the signaling indication of the transmission times through a dedicated radio resource control message; sending the signaling indication of the transmission times through D2D grant information; and sending the signaling indication of the transmission times through a broadcast message.

In the embodiment, the third determination module is further arranged to determine the number of transmission times of the D2D packet according to at least one of the following information: UL-DL configuration of a TDD system; a service type; received buffer status report information; and a resource pool configuration for D2D communication.

In accordance with still another embodiment of the present disclosure, a D2D communication method is provided. In the D2D communication method, a synchronization signal is detected; a synchronization source type is determined according to the detected synchronization signal; a resource pool for D2D communication is determined according to the synchronization source type; or a TDD configuration is determined according to the synchronization source type, and a resource pool for D2D communication is determined according to the TDD configuration or a resource pool for D2D communication is determined according to the TDD configuration and the synchronization source type; and D2D communication is conducted in the resource pool for D2D communication.

In the embodiment, determining the synchronization source type according to the detected synchronization signal includes: making different synchronization source types correspond to different synchronization signal sequences. In this embodiment, the synchronization source type at least includes base station and UE.

In the embodiment, determining the TDD configuration according to the synchronization source type includes: receiving an indication parameter for indicating the TDD configuration when the synchronization source type is base station; and/or when the synchronization source type is UE, receiving an indication parameter for indicating the TDD configuration, or acquiring pre-configured information of the TDD configuration. The pre-configured information is used for indicating the TDD configuration, or determining a pre-defined TDD configuration to be the TDD configuration.

In the embodiment, determining the resource pool for D2D communication according to the synchronization source type or according to the synchronization source type and the TDD configuration includes: receiving an indication parameter for indicating the resource pool for D2D communication when the synchronization source type is base station; receiving an indication parameter for indicating the resource pool for D2D communication when the synchronization source type is UE; determining a resource for D2D communication according to a predefined rule when the synchronization source type is UE; determining a resource for D2D communication according to the TDD configuration when the synchronization source type is UE. All uplink subframes in the TDD configuration or all uplink subframes and special subframes in the TDD configuration or a part of uplink subframes in the TDD configuration are determined as time-domain resources for the D2D communication.

In the embodiment, the resource pool for D2D communication includes a control resource pool for transmitting D2D control information and a data resource pool for transmitting D2D data. When a configuration parameter for indicating the resource pool for D2D communication is received, the configuration parameter includes a parameter for indicating the control resource pool and/or the data resource pool. When the resource pool for D2D communication is determined according to a predefined rule, the predefined rule is used for determining the control resource pool and/or the data resource pool.

In accordance with yet another embodiment of the present disclosure, another D2D communication apparatus is provided which includes a synchronization module, a processing module and a communication module. The synchronization module is arranged to detect a synchronization signal and determine a synchronization source type according to the detected synchronization signal. The processing module is arranged to determine a resource pool for D2D communication according to the synchronization source type; or determine a TDD configuration according to the synchronization source type and then determine a resource pool for D2D communication according to the TDD configuration or determine a resource pool for D2D communication according to the TDD configuration and the synchronization source type. The communication module is arranged to conduct D2D communication in the resource pool for D2D communication.

In the embodiment, different synchronization source types correspond to different synchronization signal sequences, and the synchronization source type at least includes base station and UE.

In the embodiment, the processing module includes a third receiving module. The third receiving module is arranged to receive an indication parameter for indicating the TDD configuration when the synchronization source type is base station, the indication parameter is borne in a PSBCH; and/or when the synchronization source type is UE, receive an indication parameter for indicating the TDD configuration. The processing module is arranged to determine the TDD configuration according to the indication parameter. Alternatively, the processing module is arranged to determine the TDD configuration according to pre-configured information of the TDD configuration or determine a pre-defined TDD configuration to be the TDD configuration.

In the embodiment, the processing module includes a fourth receiving module. The fourth receiving module is arranged to receive an indication parameter for indicating a resource pool for D2D communication when the synchronization source type is base station, and/or receive an indication parameter for indicating a resource pool for D2D communication when the synchronization source type is UE. Alternatively, the processing module is arranged to determine a resource for D2D communication according to a predefined rule when the synchronization source type is UE. Alternatively, the processing module is arranged to determine a resource for D2D communication according to the TDD configuration when the synchronization source type is UE. All uplink subframes in the TDD configuration or all uplink subframes and special subframes in the TDD configuration or a part of uplink subframes in the TDD configuration are determined as time-domain resources for the D2D communication.

In the embodiment, the resource pool for D2D communication includes a control resource pool for transmitting D2D control information and a data resource pool for transmitting D2D data. When a configuration parameter for indicating the resource pool for D2D communication is received, the configuration parameter includes a parameter for indicating the control resource pool and/or the data resource pool. When the resource pool for D2D communication is determined according to a predefined rule, the predefined rule is used for determining the control resource pool and/or the data resource pool.

By virtue of the technical schemes provided by the embodiments of the present disclosure, a first resource set for transmitting D2D control information is determined according to a received D2D resource configuration parameter and/or stored radio resource pre-configuration information, a second resource for transmitting D2D data is determined, and D2D control information is sent in the first resource set and/or D2D data is sent in the second resource. The technical schemes address the scheduling problem existing in the direct communication of D2D UEs on the radio resource of a cellular communication system in the related art. In particular, facing the characteristic of a cellular system of TDD system that the ratio of uplink subframes to downlink subframes varies under different TDD configurations, the reliability of the transmission of D2D communication control information and data information and the flexibility of D2D communication scheduling under each TDD configuration for different types of services when D2D communication can only use uplink resources can be guaranteed.

### Brief Description of the Drawings

The accompanying drawings described herein which are incorporated into and form a part of the application are provided for the better understanding of the present disclosure, and exemplary embodiments of the present disclosure and the description of the exemplary embodiments serve to illustrate the present but are not to be construed as limitations to the present disclosure. In the accompanying drawings:
Fig. 1 is a flowchart illustrating a D2D communication method according to an embodiment of the present disclosure;
Fig. 2 is a block diagram illustrating the structure of a D2D communication apparatus according to an embodiment of the present disclosure;
Fig. 3 is a flowchart illustrating another D2D communication method according to an embodiment of the present disclosure;
Fig. 4 is a block diagram illustrating the structure of another D2D communication apparatus according to an embodiment of the present disclosure;
Fig. 5 is a flowchart illustrating still another D2D communication method according to an embodiment of the present disclosure;
Fig. 6 is a block diagram illustrating the structure of still another D2D communication apparatus according to an embodiment of the present disclosure;
Fig. 7 is a schematic diagram illustrating existing structural division of a radio resource according to an exemplary embodiment of the present disclosure; and
Fig. 8 is a schematic diagram illustrating the network deployment of existing cellular wireless communication system according to an exemplary embodiment of the present disclosure;
Fig. 9 is a schematic diagram 1 illustrating a D2D data subframe pattern set for scheduling according to an exemplary embodiment of the present disclosure;
Fig. 10 is a schematic diagram 2 illustrating a D2D data subframe pattern set for scheduling according to an exemplary embodiment of the present disclosure;
Fig. 11 is a schematic diagram illustrating the positions of subframes for sending D2D control information and D2D data according to an exemplary embodiment of the present disclosure;
Fig. 12 is a flowchart illustrating yet still another D2D communication method according to an embodiment of the present disclosure; and
Fig. 13 is a block diagram illustrating the structure of yet still another D2D communication apparatus according to an embodiment of the present disclosure.

### Detailed Description of the Embodiments

The present disclosure will be described below in detail with reference to accompanying drawings when read in conjunction with specific embodiments. It should be noted that the embodiments of the present disclosure and the features thereof can be combined with each other if no conflict is caused.

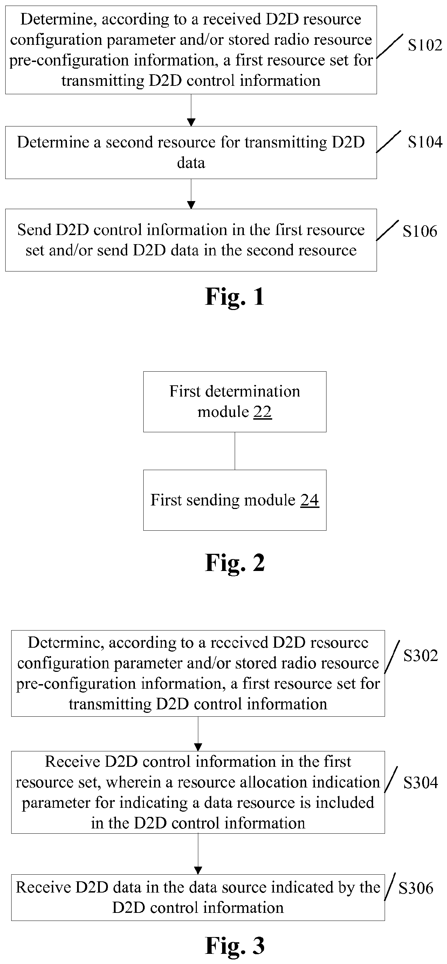

A D2D communication method is provided in an embodiment. Fig. 1 is a flowchart illustrating a D2D communication method according to an embodiment of the present disclosure. As shown in Fig. 1, the method includes the following steps.

At step S102, a first resource set for transmitting D2D control information is determined according to a received D2D resource configuration parameter and/or stored radio resource pre-configuration information.

At step S104, a second resource for transmitting D2D data is determined.

At step S106, D2D control information is sent in the first resource set and/or D2D data is sent in the second resource.

By executing the foregoing steps to determine, according to a received D2D resource configuration parameter and/or stored radio resource pre-configuration information, a first resource set for transmitting D2D control information, determine a second resource for transmitting D2D data, and send D2D control information in the first resource set and/or sending D2D data in the second resource, the embodiment realizes the sending of D2D control information and D2D data in D2D communication. The embodiment consequentially addresses the scheduling problem existing in the direct communication of D2D UEs on the radio resource of a cellular communication system in the related art. In particular, facing the characteristic of a cellular system of TDD system that the ratio of uplink subframes to downlink subframes varies under different TDD configurations, the reliability of the transmission of D2D communication control information and data information and the flexibility of D2D communication scheduling under each TDD configuration for different types of services when D2D communication can only use uplink resources can be guaranteed.

A scheme consisting of the foregoing steps S102-S106 is especially applicable to a D2D UE which is a sending terminal. The received D2D resource configuration parameter and/or the stored radio resource pre-configuration information may come from an eNB or a covered UE, that is, the received D2D resource configuration parameter and/or the stored radio resource pre-configuration information may be forwarded by a PSBCH.

In the embodiment, the second resource may be determined according to at least one of the following information: received D2D data transmission resource pool configuration information; received transmission resource indication information for D2D data transmission; and the stored radio resource pre-configuration information.

In the embodiment, when a subframe in the first resource set or a subframe for transmitting the D2D control information is overlapped with a subframe in the second resource, only the D2D data is sent in the overlapped subframe. Alternatively, when a subframe in the first resource set or a subframe for transmitting the D2D control information is overlapped with a subframe in the second resource, only the D2D control information is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D data is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D control information is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, the D2D control information and the D2D data are both sent in the overlapped subframe, and only the D2D control information or the D2D data is sent in the overlapped frequency-domain resource. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is orthogonal in position to a frequency-domain resource of the second resource, the D2D control information and the D2D data are both sent in the overlapped subframe.

In the embodiment, the D2D data may be sent in the second resource in the following manner. The number of transmission times of the D2D data is determined, and the D2D data is sent according to the determined number of transmission times. The number of transmission times refers to the number of times the same packet is transmitted when the packet is transmitted repeatedly. The number of transmission times of the D2D data may be determined according to at least one of the following information: UL-DL configuration of a TDD system; a service type; a received signaling indication of the number of transmission times; an index of a resource pattern for transmission (e.g., Time Resource Pattern for Transmission, short as T-RPT) of the D2D data; and a resource pattern for transmission (e.g., a T-RPT) of the D2D data. The service types at least include semi-persistently scheduled services and non-semi-persistently scheduled services; or service types at least include a Voice over IP (VoIP) service and non-VoIP services. The received signaling indication of the number of transmission times may be sent by a network-side device or forwarded by a UE in a partial coverage scenario or a non-coverage scenario. The 'partial coverage' refers to that a part of UEs participating in D2D communication are out of the coverage of a cellular network. The 'non-coverage' refers to that each UE participating in D2D communication is out of the coverage of a cellular network.

The T-RPT is represented with a bitmap, for example, a bitmap 00110000 corresponds to eight subframes, and the bitmap indicates that the third subframe and the fourth subframe are used for the transmission of the D2D data. A bitmap may be indicated by an index. For example, in a TDD system, the bitmaps available to a certain UL-DL configuration may form a bitmap set in which each bitmap corresponds to one index. In D2D communication, a sending UE indicates the index to a receiving UE, and the receiving UE can determine the positions of the subframes for transmitting the D2D data according to the index.

In the embodiment, when the number of transmission times of the D2D data is determined at least according to the UL-DL configuration of the TDD system, each TDD UL-DL configuration corresponds to one or more values for the number of transmission times.

In the embodiment, when the number of transmission times of the D2D data is determined at least according to the received signaling indication of the number of transmission times, the method further includes the following processing. The signaling indication of the number of transmission times, which is sent from a network-side device and borne in a dedicated radio resource control message or D2D grant information (sent in a PDCCH or an EPDCCH) or a broadcast message, is received. Alternatively, the signaling indication of the number of transmission times, which is sent from another user equipment and borne in a PSBCH, is received. A value for the number of transmission times is sent through the D2D control information.

In the embodiment, when the number of transmission times of the D2D data is determined at least according to the service type, there are N service types which at least include two service types corresponding to different values for the number of transmission times, where N>1; and indication information for indicating the service type is sent through the D2D control information.

In the embodiment, when the number of transmission times of the D2D data is determined at least according to the index of the resource pattern for transmission of the D2D data, the method may further include the following processing. Subframe positions of transmission resources are represented by a resource pattern for transmission, each resource pattern for transmission corresponds to more than one index value, and different index values correspond to different values for the number of transmission times. Alternatively, a plurality of resource pattern sets for transmission are predefined, each resource pattern set for transmission corresponds to one value for the number of transmission times, and resource patterns for transmission included in different resource pattern sets for transmission are indicated by different indexes. The index of the resource pattern for transmission is sent through the D2D control information.

In the embodiment, when the number of transmission times of the D2D data is determined at least according to the resource pattern for transmission of the D2D data, each resource pattern for transmission corresponds to one value for the number of transmission times, and each resource pattern for transmission corresponds to one index value; and an index for indicating the resource pattern for transmission is sent through the D2D control information.

A D2D communication apparatus corresponding to the foregoing D2D communication method is also provided in an embodiment to realize the foregoing embodiments and exemplary implementation modes, and what has been described above is not described here repeatedly. The term 'module', as used hereinafter, is the combination of software and/or hardware for realizing preset functions. Although the apparatuses described in the following embodiments are implemented as software preferably, the implementation of the apparatuses as hardware or the combination of software and hardware may also be devised.

Fig. 2 is a block diagram illustrating the structure of a D2D communication apparatus according to an embodiment of the present disclosure. As shown in Fig. 2, the apparatus includes: a first determination module 22 and a first sending module 24 both of which are described in detail below.

The first determination module 22 is arranged to determine, according to a received D2D resource configuration parameter and/or stored radio resource pre-configuration information, a first resource set for transmitting D2D control information. The first determination module 22 is further arranged to determine a second resource for transmitting D2D data. The first sending module 24 is coupled with the first determination module 22 and arranged to send D2D control information in the first resource set and/or send D2D data in the second resource.

In the embodiment, the second resource may be determined according to at least one of the following information: received D2D data transmission resource pool configuration information; received transmission resource indication information for D2D data transmission; and the stored radio resource pre-configuration information.

In the embodiment, when a subframe in the first resource set or a subframe for transmitting the D2D control information is overlapped with a subframe in the second resource, only the D2D data is sent in the overlapped subframe. Alternatively, when a subframe in the first resource set or a subframe for transmitting the D2D control information is overlapped with a subframe in the second resource, only the D2D control information is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D data is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D control information is sent in the overlapped subframe. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, the D2D control information and the D2D data are both sent in the overlapped subframe, and only the D2D control information or the D2D data is sent in the overlapped frequency-domain resource. Alternatively, when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is orthogonal in position to a frequency-domain resource of the second resource, the D2D control information and the D2D data are both sent in the overlapped subframe.

In the embodiment, the first determination module 22 is further arranged to determine the number of transmission times of the D2D data. The first sending module 24 is further arranged to send the D2D data according to the determined number of transmission times. The first determination module 22 may be arranged to determine the number of transmission times of the D2D data according to at least one of the following information:
UL-DL configuration of a TDD system; a service type; a received signaling indication of the number of transmission times; an index of a resource pattern for transmission of the D2D data; and a resource pattern for transmission of the D2D data.

In the embodiment, when the number of transmission times of the D2D data is determined at least according to the UL-DL configuration of the TDD system, each TDD UL-DL configuration corresponds to one or more values for the number of transmission times.

In the embodiment, when the number of transmission times of the D2D data is determined at least according to the received signaling indication of the number of transmission times, the apparatus further includes a first receiving module. The first receiving module is arranged to receive the signaling indication of the number of transmission times which is sent from a network-side device and borne in a dedicated radio resource control message or D2D grant information or a broadcast message. Alternatively, the first receiving module is arranged to receive the signaling indication of the number of transmission times which is sent from another user equipment and borne in a PSBCH. A parameter indicating the number of transmission times is included in the D2D control information sent by the first sending module.

In the embodiment, when the number of transmission times of the D2D data is determined at least according to the service type, there are N service types which at least include two service types corresponding to different values for the number of transmission times, where N>1. A parameter indicating the service type is included in the D2D control information sent by the first sending module 24.

In the embodiment, when the number of transmission times of the D2D data is determined at least according to the index of the resource pattern for transmission of the D2D data, subframe positions of transmission resources are represented by a resource pattern for transmission (e.g., T-RPT). Each resource pattern for transmission corresponds to more than one index value, and different index values correspond to different values for the number of transmission times. Alternatively, a plurality of resource pattern sets for transmission are predefined, each resource pattern set for transmission corresponds to one value for the number of transmission times, and resource patterns for transmission included in different resource pattern sets for transmission are indicated by different indexes. The index of the resource pattern for transmission is included in the D2D control information sent by the first sending module 24.

In the embodiment, when the number of transmission times of the D2D data is determined at least according to the resource pattern for transmission of the D2D data, each resource pattern for transmission corresponds to one value for the number of transmission times, and each resource pattern for transmission corresponds to one index value; and an index for indicating the resource pattern for transmission is included in the D2D control information sent by the first sending module 24.

In an embodiment, another D2D communication method is provided. Fig. 3 is a flowchart illustrating another D2D communication method according to an embodiment of the present disclosure. As shown in Fig. 3, the method includes the following steps:
At step S302, a first resource set for transmitting D2D control information is determined according to a received D2D resource configuration parameter and/or stored radio resource pre-configuration information.

At step S304, D2D control information is received in the first resource set. A resource allocation indication parameter for indicating a data resource is included in the D2D control information.

At step S306, D2D data is received in the data source indicated by the D2D control information.

By executing the foregoing steps, a first resource set for transmitting D2D control information is determined according to a received D2D resource configuration parameter and/or stored radio resource pre-configuration information, D2D control information in which a resource allocation indication parameter for indicating a data resource is included is received in the first resource set, and D2D data is received in the data source indicated by the D2D control information. The embodiment realizes the receiving of D2D control information and D2D data in D2D communication and consequentially addresses the scheduling problem existing in the direct communication of D2D UEs on the radio resource of a cellular communication system in the related art. In particular, facing the characteristic of a cellular system of TDD system that the ratio of uplink subframes to downlink subframes varies under different TDD configurations, the reliability of the transmission of D2D communication control information and data information and the flexibility of D2D communication scheduling under each TDD configuration for different types of services when D2D communication can only use uplink resources can be guaranteed.

A scheme consisting of the foregoing steps S302-S306 is especially applicable to a D2D UE at a receiving side. The received D2D resource configuration parameter and/or the stored radio resource pre-configuration information may come from an eNB or a covered UE, that is, the received D2D resource configuration parameter and/or the stored radio resource pre-configuration information are/is forwarded by a PSBCH.

In the embodiment, a time-domain resource indicated by the data resource may be the positions of physical subframes, or a time-domain resource indicated by the data resource may be virtual subframes corresponding to subframes in a D2D data transmission resource pool.

In the embodiment, when a subframe in the first resource set or a subframe for transmitting the D2D control information is overlapped with a subframe in the data resource, only the D2D data is received in the overlapped subframe. Alternatively, when a subframe in the first resource set or a subframe for transmitting the D2D control information is overlapped with a subframe in the data resource, only the D2D control information is received in the overlapped subframe. Alternatively, when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D data is received in the overlapped subframe. Alternatively, when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D control information is received in the overlapped subframe. Alternatively, when a subframe in the first resource set or a subframe for transmitting the D2D control information is overlapped with a subframe in the data resource, and in the overlapped subframe, a frequency-domain resource of the first resource set is orthogonal in position to a frequency-domain resource of the data resource, the D2D control information and the D2D data are both received in the overlapped subframe.

In the embodiment, receiving the D2D data in the data resource may include the following steps. The number of transmission times of the D2D data is determined, and the D2D data is received according to the determined number of transmission times. The number of transmission times of the D2D data may be determined according to at least one of the following information:
UL-DL configuration of a TDD system; a service type; a received signaling indication of the number of transmission times (may be sent from a network or a sending UE); an index of a resource pattern for transmission of the D2D data; and a resource pattern for transmission of the D2D data.

In the embodiment, when the number of transmission times of the D2D data is determined at least according to the UL-DL configuration of the TDD system, each TDD UL-DL configuration corresponds to one or more values for the number of transmission times.

In the embodiment, when the number of transmission times of the D2D data is determined at least according to the received signaling indication of the number of transmission times, the method further includes: receiving the signaling indication of the number of transmission times. The signaling indication of the number of transmission times is sent from a network-side device and borne in a dedicated radio resource control message or D2D grant information or a broadcast message. Alternatively, the signaling indication of the number of transmission times is sent from another user equipment and borne in a PSBCH. Alternatively, the signaling indication of the number of transmission times is sent by a UE which is a sending terminal of the D2D data, and is borne in the D2D control information.

In the embodiment, when the number of transmission times of the D2D data is determined at least according to the index of the resource pattern for transmission of the D2D data, the method further includes: receiving the index of the resource pattern for transmission of the D2D data. Subframe positions of transmission resources are represented by a resource pattern for transmission, one resource pattern for transmission corresponds to more than one index value, and different index values correspond to different values for the number of transmission times. Alternatively, the method may further include: predefining a plurality of resource pattern sets for transmission. Each resource pattern set for transmission corresponds to one value for the number of transmission times, and resource patterns for transmission included in different resource pattern sets for transmission are indicated by different indexes.

In the embodiment, when the number of transmission times of the D2D data is determined at least according to the resource pattern for transmission of the D2D data, the method further includes: receiving a signaling for indicating the index of the resource pattern for transmission of the D2D data. Each resource pattern for transmission corresponds to one value for the number of transmission times, and each resource pattern for transmission corresponds to one index value.

A D2D communication apparatus corresponding to the foregoing D2D communication method is also provided in an embodiment to realize the foregoing embodiments and exemplary implementation modes, and what has been described above is not described here repeatedly. The term 'module', as used hereinafter, is the combination of software and/or hardware for realizing preset functions. Although the apparatuses described in the following embodiments are implemented as software preferably, the implementation of the apparatuses as hardware or the combination of software and hardware may also be devised.

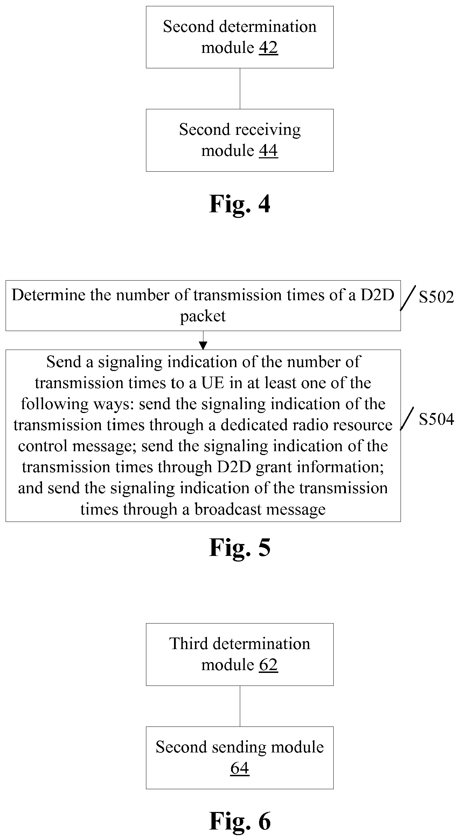

Fig. 4 is a block diagram illustrating the structure of another D2D communication apparatus according to an embodiment of the present disclosure. As shown in Fig. 4, the apparatus includes: a second determination module 42 and a second receiving module 44 both of which are described in detail below.

The second determination module 42 is arranged to determine, according to a received D2D resource configuration parameter and/or stored radio resource pre-configuration information, a first resource set for transmitting D2D control information. The second receiving module 44 is coupled with the second determination module 42 and arranged to receive D2D control information in the first resource set, a resource allocation indication parameter for indicating a data resource is included in the D2D control information. The second receiving module 44 is further arranged to receive D2D data in the data source indicated by the D2D control information.

In the embodiment, a time-domain resource indicated by the data resource is the positions of physical subframes, or a time-domain resource indicated by the data resource is virtual subframes corresponding to subframes in a D2D data transmission resource pool.

In the embodiment, when a subframe in the first resource set or a subframe for transmitting the D2D control information is overlapped with a subframe in the data resource, only the D2D data is received in the overlapped subframe. Alternatively, when a subframe in the first resource set or a subframe for transmitting the D2D control information is overlapped with a subframe in the data resource, only the D2D control information is received in the overlapped subframe. Alternatively, when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D data is received in the overlapped subframe. Alternatively, when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D control information is received in the overlapped subframe. Alternatively, when a subframe in the first resource set or a subframe for transmitting the D2D control information is overlapped with a subframe in the data resource, and in the overlapped subframe, a frequency-domain resource of the first resource set is orthogonal in position to a frequency-domain resource of the data resource, the D2D control information and the D2D data are both received in the overlapped subframe.

In the embodiment, the second determination module 42 may be arranged to determine the number of transmission times of the D2D data. The second receiving module 44 may also be arranged to receive the D2D data according to the determined number of transmission times. The second determination module 42 may be arranged to determine the number of transmission times of the D2D data according to at least one of the following information:
UL-DL configuration of a TDD system; a service type; a received signaling indication of the number of transmission times; an index of a resource pattern for transmission of the D2D data; and a resource pattern for transmission of the D2D data.

In the embodiment, when the number of transmission times of the D2D data is determined at least according to the UL-DL configuration of the TDD system, each TDD UL-DL configuration corresponds to one or more values for the number of transmission times.

In the embodiment, when the number of transmission times of the D2D data is determined at least according to the received signaling indication of the number of transmission times, the second receiving module 44 may also be arranged to receive the signaling indication of the number of transmission times. The signaling indication of the number of transmission times is sent from a network-side device and borne in a dedicated radio resource control message or D2D grant information or a broadcast message. Alternatively, the signaling indication of the number of transmission times is sent from another user equipment and borne in a PSBCH. Alternatively, the signaling indication of the number of transmission times is sent by a UE which is a sending terminal of the D2D data, and is borne in the D2D control information.

In the embodiment, when the number of transmission times of the D2D data is determined at least according to the index of the resource pattern for transmission of the D2D data, the second receiving module 44 is further arranged to receive the index of the resource pattern for transmission of the D2D data. Subframe positions of transmission resources are represented by a resource pattern for transmission, one resource pattern for transmission corresponds to more than one index value, and different index values correspond to different values for the number of transmission times. Alternatively, a plurality of resource pattern sets for transmission are predefined, each resource pattern set for transmission corresponds to one value for the number of transmission times. Resource patterns for transmission included in different resource pattern sets for transmission are indicated by different indexes.

In the embodiment, when the number of transmission times of the D2D data is determined at least according to the resource pattern for transmission of the D2D data, the second receiving module 44 may also be arranged to receive a signaling for indicating the index of the resource pattern for transmission of the D2D data. Each resource pattern for transmission corresponds to one value for the number of transmission times, and each resource pattern for transmission corresponds to one index value.

Yet another D2D communication method is also provided in an embodiment. Fig. 5 is a flowchart illustrating yet another D2D communication method according to an embodiment of the present disclosure. As shown in Fig. 5, the method includes the following steps.

At step S502, the number of transmission times of a D2D packet is determined.

At step S504, a signaling indication of the number of transmission times is sent to a UE in at least one of the following ways: sending the signaling indication of the transmission times through a dedicated radio resource control message; sending the signaling indication of the transmission times through D2D grant information; and sending the signaling indication of the transmission times through a broadcast message.

By executing the foregoing steps, the number of transmission times of a D2D packet is determined and a signaling indication of the number of transmission times is sent to a UE in the foregoing way. The embodiment realizes the determination of the number of transmission times of a D2D packet and the sending of the D2D packet and consequentially addresses the scheduling problem existing in the direct communication of D2D UEs on the radio resource of a cellular communication system in the related art. In particular, facing the characteristic of a cellular system of TDD system that the ratio of uplink subframes to downlink subframes varies under different TDD configurations, the reliability of the transmission of D2D communication control information and data information and the flexibility of D2D communication scheduling under each TDD configuration for different types of services when D2D communication can only use uplink resources can be guaranteed.

A scheme consisting of the foregoing steps S502 and S504 is especially applicable to a network side.

In the embodiment, the number of transmission times of the D2D packet may be determined according to at least one of the following information:
UL-DL configuration of a TDD system, a service type (e.g. a semi-persistently scheduled service or VoIP service); received buffer status report information; and a resource pool configuration for D2D communication.

A D2D communication apparatus corresponding to the foregoing D2D communication method is also provided in an embodiment to realize the foregoing embodiments and exemplary implementation modes, and what has been described above is not described here repeatedly. The term 'module', as used hereinafter, is the combination of software and/or hardware for realizing preset functions. Although the apparatuses described in the following embodiments are implemented as software preferably, the implementation of the apparatuses as hardware or the combination of software and hardware may also be devised.

Fig. 6 is a block diagram illustrating the structure of yet another D2D communication apparatus according to an embodiment of the present disclosure. As shown in Fig. 6, the apparatus includes: a third determination module 62 and a second sending module 64 both of which are described in detail below.

The third determination module 62 is arranged to determine the number of transmission times of a D2D packet. The second sending module 64 is coupled with the third determination module 62 and arranged to send a signaling indication of the number of transmission times to a UE in at least one of the following ways: sending the signaling indication of the transmission times through a dedicated radio resource control message; sending the signaling indication of the transmission times through D2D grant information; and sending the signaling indication of the transmission times through a broadcast message.

In the embodiment, the third determination module 62 may also be arranged to determine the number of transmission times of the D2D packet according to at least one of the following information: UL-DL configuration of a TDD system; a service type; received buffer status report information; and a resource pool configuration for D2D communication.

In conclusion, the method addresses the scheduling problem existing in D2D communication. In particular, facing the characteristic of a TDD system that the ratio of uplink subframes to downlink subframes is variable, the reliability of the transmission of D2D communication control information and data information and the flexibility of D2D communication scheduling for different types of services in a TDD system can be guaranteed.

The present disclosure will be described below with reference to exemplary embodiments which combine the foregoing embodiments with the exemplary implementation modes of the foregoing embodiments.

A D2D communication method and a D2D communication apparatus are provided in the following exemplary embodiments. The technical solutions provided herein are applicable to a cellular wireless communication system or network. Common cellular wireless communication systems may be based on a Code Division Multiplexing Access (CDMA) technology, a Frequency Division Multiplexing Access (FDMA) technology, an Orthogonal-FDMA (OFDMA) technology, a Single Carrier-FDMA (SC-FDMA) technology or the like. For example, the downlink (or called forward link) and the uplink (or called reverse link) of a 3rd Generation Partnership Project (3GPP) Long Term Evolution (LTE)/LTE-Advanced (LTE-A) cellular communication system are based on the OFDMA technology and the SC-FDMA technology, respectively. In future, there may be a link supportive to a hybrid multiple-access technology.

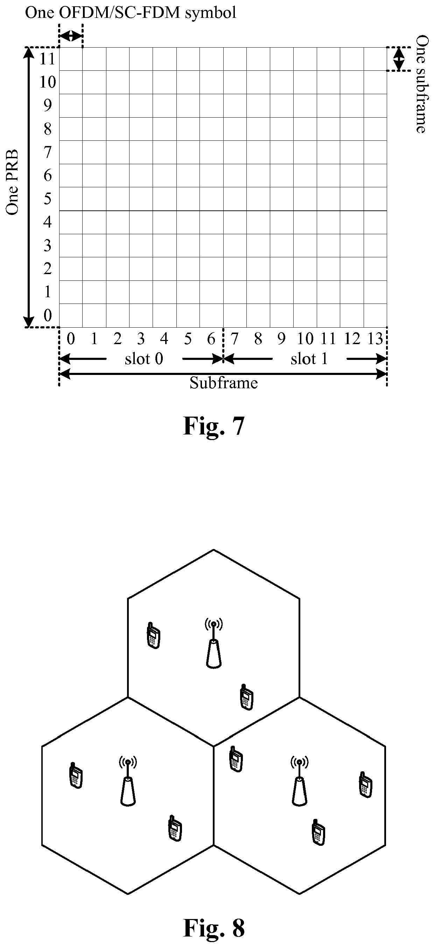

In an OFDMA/SC-FDMA system, a Radio Resource for communication is in the form of two dimensions of time and frequency. For example, Fig. 7 is a schematic diagram illustrating existing structural division of a radio resource according to an exemplary embodiment of the present disclosure. As shown in Fig. 7, for an LTE/LTE-A system, communication resources of the uplink and the downlink are both divided into radio frames in the time domain. The length of each radio frame is 10ms, including 10 subframes whose length is 1ms. Each subframe includes two slots both of which have a length of 0.5ms. According to the difference in the configuration of a Cyclic Prefix (CP), each slot may include 6 or 7 OFDM symbols or SC-FDM symbols.

In the frequency domain, a resource is divided into sub-carriers. In communication, the smallest unit for the allocation of a frequency-domain resource is Resource Block (RB) which corresponds to one Physical RB (PRB) of a physical resource. One PRB includes 12 sub-carries in the frequency domain, corresponding to one slot in the time domain. Two PRBs that are included in a subframe and adjacent to each other in the time domain constitute a PRB pair. The resource on each OFDM/SC-FDM symbol corresponding to one sub-carrier is referred to as a Resource Element (RE), as shown in Fig. 7.

Fig. 8 is a schematic diagram illustrating the network deployment of existing cellular wireless communication system according to an exemplary embodiment of the present disclosure. As shown in Fig. 8, the system shown in Fig. 8 may be a 3GPP LTE/LTE-A system or may be based on other cellular wireless communication technology. In the access network of a cellular wireless communication system, network devices generally include a certain number of base stations (the base station may also be called Node B or evolved Node B (eNB) or enhanced Node B (eNB)) and other network entities or network elements. These network devices may be generally and collectively referred to as a network side (Evolved Versatile Terrestrial Radio Access Network (E-UTRAN). The base station mentioned herein also includes a Low Power Node (LPN) included in a network, for example, a femto cell or a home base station (pico, relay, femto, Home eNB (HeNB), and the like). For the sake of convenience of description, only three base stations are shown in Fig. 8. A base station provides a certain radio signal coverage area in which terminals (or called UEs or devices) can communicate with the base station wirelessly. The radio signal coverage area of a base station may be divided into one or more cells or sectors, for example, three cells, according to a certain rule.

In D2D communication, a method for scheduling communication is as follows. A sending D2D UE sends a D2D control signaling (also called D2D control information) and D2D data. The D2D control signaling may also be referred to as a Scheduling Assignment (SA) or Sidelink Control Information (SCI). The D2D control signaling is used for indicating the resource position of D2D data, a Modulation and Coding Scheme (MCS), parameters related to power control and parameters related to pre-coding and the like. The D2D control signaling may be directly transmitted in the format of PUSCH, or a new physical channel, for example, a Physical Sidelink Control Channel (PSCCH), may be defined to bear the D2D control signaling. The D2D data, which is D2D service data directly transmitted between D2D UEs, can be directly transmitted in the format of PUSCH, or a new physical channel, for example, a PSCCH, may be defined to bear the D2D data.

In this scheduling mode, a resource for sending SCI may be allocated by a network side (e.g. a base station) or selected by a sending UE. For example, a base station indicates a resource pool for transmitting SCI through a broadcast signaling and indicates a resource in the resource pool for transmitting SCI for a sending D2D UE through a control scheduling, this D2D communication mode is called mode 1. Or, the sending UE selects a resource for transmitting SCI from an SCI resource pool based on a certain rule, and this D2D communication mode is called mode 2. For the transmission of D2D data, a resource may be allocated by a base station in mode 1, for example, a base station indicates the position of a resource for transmitting D2D data for a sending UE through a control signaling (e.g. the control signaling is generally borne in D2D grant information). While in mode 2, a D2D data transmission resource is configured in a base station by a sending D2D UE based on a certain rule, or a D2D data transmission resource is selected from a pre-configured (or pre-defined) resource pool.

For a receiving D2D UE, the receiving D2D UE may detect SCI in an SCI resource pool first and then receive D2D data based on the indication of the SCI. The D2D data resource (e.g. subframes) indicated by the SCI may be the position of a physical resource. For example, the positions of the indicated time-domain subframes are physical subframes, in this case, the receiving UE directly receives D2D data in the indicated physical subframes. Alternatively, the D2D data resource (e.g., subframes) indicated by the SCI may be the position of a virtual resource. For example, D2D data is restricted to be transmitted in a D2D resource pool, and the indicated subframes correspond to subframes in the resource pool.

One realization mode of D2D communication is non-feedback communication. In non-feedback communication, a data receiving terminal feeds no Acknowledgement (ACK) or Non-Acknowledgement (NACK) information, and this communication mode is more suitable for broadcast or multi-cast communication. In non-feedback communication, to guarantee the reliability of communication, a data transmission scheme of blind retransmission can be introduced, that is, a sending terminal directly transmits a packet, for example, a Transmission Block (TB) or a Medium Access Control (MAC) Packet Data Unit (PDU), for a certain number of times. For example, the sending terminal retransmits a packet for three times after sending the packet for the first time, that is, sends the packet for four times. In the actual communication, a receiving terminal needs to know a specific value for the number of data transmission times so as to guarantee the correct receiving of data.

In an implementation mode, the number of retransmission times or the number of transmission times of D2D data is determined according to at least one of the following information: UL-DL configuration of a TDD system; a service type; a received signaling indication of the number of transmission times; an index of a resource pattern for transmission of the D2D data; and a resource pattern for transmission of the D2D data. The D2D data is sent or received according to the determined number of transmission times.

Seven subframe configurations are defined in an LTE Release-8 TDD system. The uplink/downlink configurations of subframes in a TDD LTE system are shown in Table 1. As shown in Table 1, each configuration is different in the proportion of uplink subframes. If it is restricted that a D2D signal can only be transmitted on uplink subframes, then the maximum number of available D2D subframes may also be restricted by a TDD configuration. Based on this, a method provided in an embodiment to realize the transmission of D2D communication data is as follows. The number of transmission times of D2D data is determined according to a TDD UL-DL configuration. Under a TDD configuration involving a relatively small number of uplink subframes, a relatively small value for the number of retransmission times may be defined. Under a TDD configuration involving a relatively large number of uplink subframes, a relatively large value for the number of retransmission times may be defined.

**Table 1**

| UL-DL configuration of subframes | Subframe number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

For example, for configuration 0/1: it may be restricted that the number of transmission times of D2D data is 4. For configuration 2/4/5, it may be restricted that the number of transmission times of D2D data is 2 or 1. The restriction of the number of transmission times of D2D data to be 2 or 1 means that the number of transmission times of D2D data under this TDD configuration is restricted in the system to be 2 or that the number of transmission times of D2D data under this TDD configuration is restricted to be 1 or that the number of transmission times of D2D data under this TDD configuration is restricted to be 2 or 1. A specific value for the number of transmission times is determined in the way described in a related embodiment. This explanation is applicable to a similar depiction given hereinafter, and a similar depiction given hereinafter is not described repeatedly. For configuration 3, it may be restricted that the number of transmission times of D2D data is 4 or 2. For configuration 6, it may be restricted that the number of transmission times of D2D data is 4.

In wireless communication, different types of services generally have different requirements on delay. For example, for a VoIP service, a packet is generally transmitted within 20ms (millisecond), and a new packet may be waiting to be transmitted after 20ms is up. In view of this, a method provided in an embodiment to realize the transmission of D2D communication data is as follows. The number of transmission times of D2D data is determined according to the service type. For example, there may be N service types that are predefined by a system, where N>1, and for each service type, there is a corresponding value for the number of D2D data transmission times.

For example, two service types are defined, that is, N=2. For each of the two service types, there is a corresponding value for the number of D2D data transmission times. For example, the number of D2D data transmission times corresponding to service type 1 (N=1) is 2, and the number of D2D data transmission times corresponding to service type 2 (N=2) is 4. For example, service type 1 may be a VoIP service, and service type 2 is non-VoIP services. It can be known from above that the service types described herein are more defined from the aspect of data transmission times but are not corresponding to conventional classification of service types.

A method provided in an embodiment to realize the transmission of D2D communication data is as follows. The number of transmission times of D2D data is determined according to a TDD UL-DL configuration and a service type. For example, there may be N service types that are predefined by a system, where N>1. For each service type, there is a corresponding value for the number of D2D data transmission times under each TDD UL-DL configuration.

For example, it is assumed that service types are still the foregoing exemplified service types. For service type N=2, the number of transmission times of D2D data under each TDD UL-DL configuration is 4. For service type N=1, the number of transmission times of D2D data under each TDD UL-DL configuration is restricted as described above. That is, for configuration 0/1, it can be restricted that the number of transmission times of D2D data is 4. For configuration 2/4/5, it can be restricted that the number of transmission times of D2D data is 2 or 1. For configuration 3, it can be restricted that the number of transmission times of D2D data is 4 or 2. For configuration 6, it can be restricted that the number of transmission times of D2D data is 4.

Further, the foregoing service type may be indicated by a sending D2D UE to a receiving D2D UE through a signaling. For example, a parameter for indicating a service type is transmitted in SCI. The receiving UE receives D2D data according to the indication signaling and the allocation of a D2D data resource.

Further, in mode 1, a sending UE may report the service type thereof to a base station, and the base station determines a resource allocation for D2D data transmission according to the service type or according to the service type and a TDD UL-DL configuration.

A method provided in an embodiment to realize the transmission of D2D communication data is as follows. The number of transmission times of D2D data is determined according to a signaling indication of the number of transmission times.

For example, a base station sends a parameter for indicating the number of transmission times of D2D data, and a sending D2D UE and a receiving D2D UE send and receive D2D data according to the number of transmission times, respectively. A signaling indication of the number of transmission times may be sent in the form of a broadcast, for example, borne in a System Information Block (SIB).

Alternatively, a sending UE determines the number of transmission times of D2D data and indicates the number of transmission times of D2D data to a receiving D2D UE through SCI. In mode 1, a sending UE may report the number of transmission times of D2D data to a base station, and based on the number of transmission times, the base station schedules the sending UE to conduct the transmission of D2D data.

Alternatively, in a partial coverage region (that is, a region where a part of the UEs participating in D2D communication may not attain the signal coverage of a base station) or a non-coverage region (D2D UEs cannot receive a signal from a base station or the channel status of D2D UEs fails to meet an access condition), a parameter for indicating the number of transmission times of D2D data may be sent through a PSBCH.

Further, the parameter for indicating the number of transmission times may indicate the number of transmission times of D2D data directly. For example, indication parameters 1, 2 and 3 (or 0, 1 and 2 or the like) indicate that the values for the number of D2D data transmission times are 1, 2 and 4, respectively. Alternatively, the parameter for indicating the number of transmission times may indicate the number of transmission times of D2D data through an index. That is, a sent signaling indication of the number of transmission times indicates an index for the number of transmission times. Different indexes correspond to different values for the number of transmission times. The same index may correspond to different values for the number of transmission times in different TDD UL-DL configurations. For example, there are two indexes 0 and 1 for indicating the number transmission times. The indexes 0 and 1 correspond to values 2 and 4 for the number of transmission times in TDD configuration 0 and values 1 and 2 for the number of transmission times in TDD configuration 2. Alternatively, the parameter for indicating the number of transmission times may directly represent the number of transmission times of D2D data. For example, indication parameters 1, 2, 3 and 4 indicate that the values for the number of D2D data transmission times are 1, 2, 3 and 4, respectively.

After determining the number of transmission times of D2D data, a sending D2D UE sends D2D data according to the number of transmission times. After determining the number of transmission times of D2D data, a receiving D2D UE receives D2D data according to the number of transmission times. In mode 1, after determining the number of transmission times, an eNB schedules the sending D2D UE to send the D2D data according to the number of transmission times.

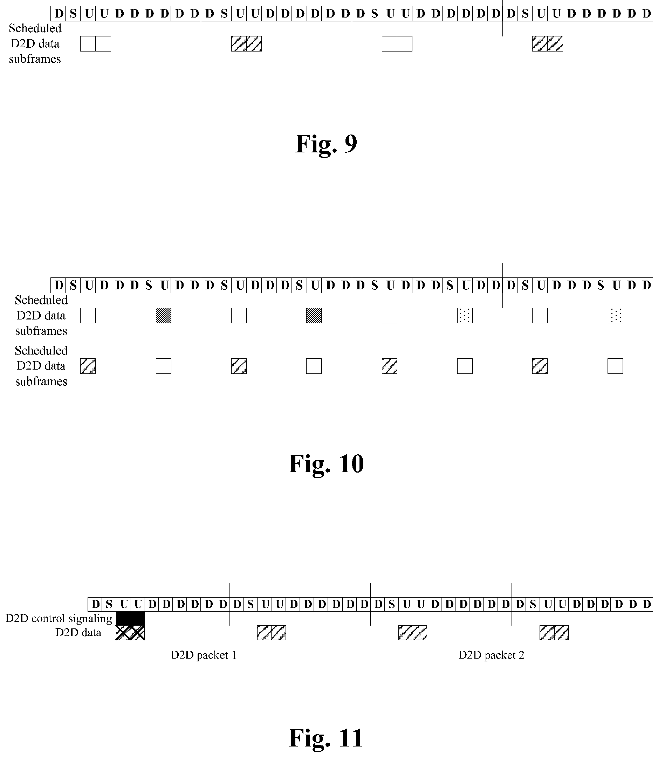

As an exemplary embodiment, a time-domain resource for sending D2D data may be indicated by a bitmap-based T-RPT described above, and the length of the bitmap of a TDD system depends on a specific TDD UL-DL configuration. For example, for TDD UL-DL configuration 4, a bitmap for indicating a time-domain resource for sending D2D data consists of 8 bits (corresponding to 8 successive uplink subframes in mode 1 and eight successive subframes in a D2D communication data resource pool in the mode 2). If the value of the bitmap is 00110011, then four of eight subframes are scheduled to send the D2D data, and such specific value of the bitmap may also be referred to as a subframe pattern. Fig. 9 is a schematic diagram 1 illustrating a D2D data subframe pattern set for scheduling according to an exemplary embodiment of the present disclosure. The eight subframes corresponding to an 8-bit bitmap are shown in Fig. 9. The scheduled D2D data subframes (subframes represented by '1') are represented by shadows in Fig. 9. If it is determined that the number of transmission times of D2D data is 4, then the four subframes represented with shadows in Fig. 9 correspond to the four times of transmission of a D2D packet. If it is determined that the number of transmission times of D2D data is 2, then the first two of the four subframes represented with shadows in Fig. 9 are used for the two times of transmission of a D2D packet, and the last two of the four subframes are used for the two times of transmission of another D2D packet.

In an implementation mode, subframe patterns for scheduling D2D data transmission form a subframe pattern set (e.g. in a TDD system, all the time resource patterns for transmission available under a TDD configuration form a subframe pattern set under the TDD configuration, no repeated description is given hereinafter). Each subframe pattern in a subframe pattern set (that is, each practicable value of a bitmap) corresponds to an index, and the number of transmission times of D2D data described herein is implicitly indicated by this index.

For example, a part of subframe patterns in the subframe pattern set or all of the subframe patterns in the subframe pattern set correspond to a plurality of index values which respectively correspond to a plurality of values for the number of D2D data transmission times. For example, still taking Fig. 9 as an example, a subframe pattern in a subframe pattern set is 00110011 which corresponds to two indexes, for example, indexes i and k both represent this subframe pattern (i and k are different non-negative integers which are smaller than M, where M is a maximum subframe pattern index value), however, the number of D2D data transmission times represented by i is different from that represented by k. For example, i corresponds to a value 2 for the number of D2D data transmission times, and k corresponds to a value 4 for the number of D2D data transmission times. If the subframe pattern index indicated by a sending D2D UE to a receiving UE is i, then the allocated subframes (that is, a T-RPT) are 00110011 (Fig. 9), the first two subframes are subframes where a D2D packet is transmitted for two times, and the last two subframes are subframes where another D2D packet is transmitted for two times. It should be noted that the correspondence of a subframe pattern to two indexes is merely exemplary, and the number of the indexes corresponding to one single subframe pattern should not be restricted to be 2.

Alternatively, subframe patterns for scheduling D2D data transmission form a plurality of subframe pattern sets (e.g. there are a plurality of subframe pattern sets under each TDD configuration). The subframe patterns in each subframe pattern set are used for the scheduling under a specific number of transmission times of D2D data. The subframe patterns included in different subframe pattern sets may be totally different or partially identical or completely identical. Indexes for indicating subframe patterns in different subframe pattern sets are different. For example, there are two subframe pattern sets 1 and 2 under a certain TDD configuration. The subframe patterns in the subframe pattern set 1 and the subframe patterns in the subframe pattern set 2 represent different values for the number of transmission times. For example, the subframe pattern set 1 corresponds to a value 1 for the number of D2D data transmission times, and the subframe pattern set 2 corresponds to a value 4 for the number of D2D data transmission times. For example, still taking Fig. 9 as an example, subframe pattern sets 1 and 2 both include a subframe pattern 00110011 which corresponds to two indexes, for example, indexes i and k both represent the subframe pattern (i and k are different non-negative integers which are smaller than M, where M is a maximum subframe pattern index value), i represents a value for the number of D2D data transmission times being 2, and k represents a value for the number of D2D data transmission times being 4. Alternatively, the subframe pattern set 1 includes 10101010 and the subframe pattern set 2 includes 01010101, because the indexes of these two subframe patterns are different, a receiving terminal can determine the subframe pattern used and the number of transmission times of D2D data based on the indexes. It should be noted that the correspondence of a subframe pattern to two indexes is merely exemplary, and the number of the indexes corresponding to a subframe pattern should not be restricted to be 2.

In an implementation mode, subframe patterns for scheduling D2D data transmission form a subframe pattern set. Each subframe pattern (that is, each T-RPT) in the subframe pattern set corresponds to an index. The number of transmission times of D2D data described herein is represented by a subframe pattern.

For example, a part of the subframe patterns in the subframe pattern set are used for allocating D2D data subframes if the number of transmission times of the D2D packet is 2 while another part of the subframe patterns in the subframe pattern set are used for allocating D2D data subframes if the number of transmission times of the D2D packet is 4. For example, subframe patterns 01010101 and 10101010 are included in a subframe pattern set corresponding to TDD UL-DL configuration 2. The subframe pattern 01010101 is used if the number of transmission times of D2D data is 2, and the subframe pattern 10101010 is used if the number of transmission times of D2D data is 4. Fig. 10 is a schematic diagram 2 illustrating a D2D data subframe pattern set for scheduling according to an exemplary embodiment of the present disclosure.

In an implementation mode, one or more subframes in a D2D control information resource set that are allowed to be configured may be overlapped with one or more subframes in a D2D data transmission resource set or one or more subframes scheduled for transmitting D2D data.

Further, when a subframe in the first resource set or a subframe for transmitting the D2D control information is overlapped with a subframe in the second resource, only the D2D data is sent in the overlapped subframe. Alternatively, when a subframe in the first resource set or a subframe for transmitting the D2D control information is overlapped with a subframe in the second resource, only the D2D control information is sent in the overlapped subframe. Alternatively, when a subframe in the first resource set or a subframe for transmitting the D2D control information is overlapped with a subframe in the second resource, if in the overlapped subframe, a frequency-domain resource of the first resource set or a frequency-domain resource for transmitting the D2D control information is overlapped in position with a frequency-domain resource of the second resource, then only the D2D data is sent in the overlapped subframe. Alternatively, when a subframe in the first resource set or a subframe for transmitting the D2D control information is overlapped with a subframe in the second resource, if in the overlapped subframe, a frequency-domain resource of the first resource set or a frequency-domain resource for transmitting the D2D control information is overlapped in position with a frequency-domain resource of the second resource, then only the D2D control information is sent in the overlapped subframe. Alternatively, when a subframe in the first resource set or a subframe for transmitting the D2D control information is overlapped with a subframe in the second resource, if in the overlapped subframe, a frequency-domain resource of the first resource set or a frequency-domain resource for transmitting the D2D control information is overlapped in position with a frequency-domain resource of the second resource, then the D2D control information and the D2D data are both sent in the overlapped subframe, and only the D2D control information or the D2D data is sent in the overlapped frequency-domain resource. Alternatively, when a subframe in the first resource set or a subframe for transmitting the D2D control information is overlapped with a subframe in the second resource, if in the overlapped subframe, a frequency-domain resource of the first resource set or a frequency-domain resource for transmitting the D2D control information is orthogonal in position to a frequency-domain resource of the second resource, then the D2D control information and the D2D data are both sent in the overlapped subframe.

Fig. 11 is a schematic diagram illustrating the positions of subframes for sending D2D control information and D2D data according to an exemplary embodiment of the present disclosure. For example, under the UL-DL configuration 4 of subframes of a TDD system, the positions of the subframes used by a sending D2D UE to send D2D control information and D2D data are shown in Fig. 11. In Fig. 11, the first four D2D data subframes are used to send a D2D packet 1, and the last four D2D data subframes are used to send a D2D packet 2. Meanwhile, the subframes used by the D2D UE to send D2D control information are identified by, for example, a black region. That is, D2D data subframes are overlapped with D2D control information subframes.

In this case, the sending D2D UE may only send D2D control information in the overlapped subframes, which means that the D2D packet 1 is transmitted for two times while the D2D packet 2 is transmitted for four times. A receiving D2D UE only receives the D2D control information sent by the sending UE in the overlapped subframes. Moreover, if a different Redundancy Version (RV) is used in different transmissions of the same D2D packet, then the selection of the RV is the same as the selection of RV used in a normal transmission (that is, a transmission causing no subframe conflict). For example, in Fig. 11, if it is assumed that the RVs used in four transmissions of a packet are 0, 2, 3 and 1, then for the D2D packet 1, the RVs used in two transmissions of the D2D packet 1 are 3 and 1.

It should be noted that the values of the number of transmission times and bitmap patterns are exemplary and are not to be construed as a limitation to a related method.

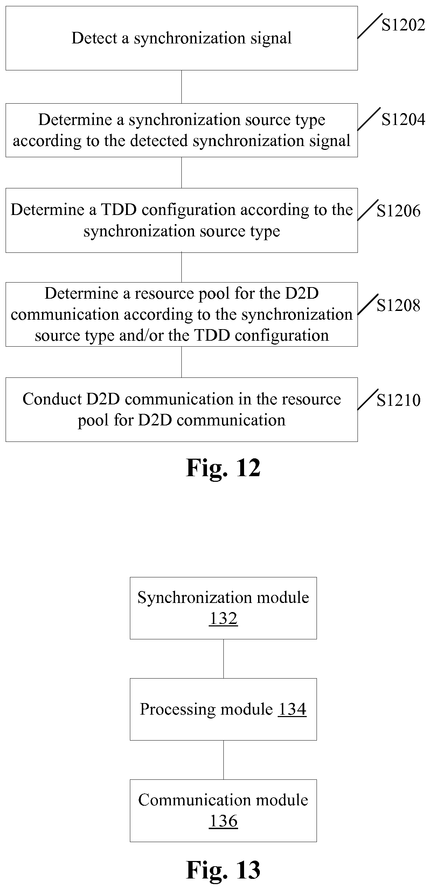

A D2D communication method is provided in the embodiment. Fig. 12 is a flowchart illustrating another D2D communication method according to an embodiment of the present disclosure. As shown in Fig. 12, the method includes the following steps:
As step S1202, a synchronization signal is detected.

As step S1204, a synchronization source type is determined according to the detected synchronization signal.

In the embodiment, determining the synchronization source type according to the detected synchronization signal refers to making different synchronization source types correspond to different synchronization signal sequences. The synchronization source type at least includes base station and UE.

A synchronization source refers to a node which sends a synchronization signal initially. In ordinary cellular networks, a synchronization source is a base station. In D2D communication, a synchronization source could at least be a base station and a UE. For example, in a partial coverage scenario, a base station sends a synchronization signal (e.g. a Primary Synchronization Signal (PSS) or a Secondary Synchronization Signal (SSS)), a UE covered by the base station can forward the synchronization signal (e.g. a UE at the edge of the coverage area of the base station forwards the synchronization signal), and a UE outside of the coverage of the base station can detect the synchronization signal forwarded by the UE at the edge of the coverage area of the base station when the UE outside of the coverage of the base station cannot detect the synchronization signal sent by the base station. The synchronization signal forwarded by the UE at the edge of the coverage area of the base station may be same as a synchronization signal sequence sent by the base station (e.g. the resource position and/or the period of the forwarded synchronization signal are different from that or those of the synchronization signal sent by the base station, thus, even sequences are the same, the UE can still determine that the detected synchronization signal is sent by another UE). A UE not in coverage can determine, according to the sequence of the synchronization signal, that a synchronization source type is base station. In this case, the UE not in coverage can determine that the current scenario is a partial coverage scenario.

In a non-coverage scenario, for example, a UE can send a synchronization signal when the UE cannot detect any synchronization signal, the synchronization signal sent by the UE is different from a synchronization signal sequence sent by the foregoing base station, for example, a D2D-specific synchronization signal sequence (e.g. the D2D-specific synchronization signal may include a PSS dedicated to D2D communication and an SSS dedicated to D2D communication, for these synchronization signals for a special purpose, at least one of a PSS sequence and an SSS sequence is different from a corresponding sequence of a cellular communication system, for example, a D2D-specific PSS is different from the PSS sequence of a cellular system) is defined. If the synchronization signal sequence detected by a UE is a synchronization signal sequence dedicated to D2D communication, then it can be determined that the synchronization source type is UE. In this case, the UE can determine that the current scenario is a non-coverage scenario.

At step S1206, a TDD configuration is determined according to the synchronization source type (S1206 is an optional step, that is, S1206 may be skipped if no TDD configuration is needed in S1208).

A UE receives an indication parameter for indicating the TDD configuration after determining that the synchronization source type is base station. In the conventional cellular communication system, a base station indicates the TDD configuration through a broadcast message. Here, the TDD configuration may be one of the seven UL-DL configurations shown in Table 1. A D2D UE, after determining the synchronization source type thereof to be base station, may further determine a TDD configuration through a received TDD configuration indication parameter. The indication parameter may be borne in a PSBCH.

After determining the synchronization source type to be UE, the UE receives an indication parameter for indicating the TDD configuration, the indication parameter may be borne in a PSBCH; or the UE acquires pre-configured information of the TDD configuration, the pre-configuration information indicates the TDD configuration. Alternatively, the UE determines a predefined TDD configuration to be the TDD configuration, for example, the use of a predefined TDD configuration in a non-coverage region or in a case where the synchronization source type is UE is appointed by a system, the specific TDD configuration may be one of the seven configurations shown in Table 1, for example, it may be appointed that a TDD configuration x is used, where x=0-6.

At step S1208, a resource pool (that is, a group of resources or a resource set) for the D2D communication is determined according to the synchronization source type, or the resource pool for the D2D communication is determined according to the synchronization source type and the TDD configuration, or resource pool for the D2D communication is determined according to the TDD configuration. That is, according to the synchronization source type and/or the TDD configuration.

A resource pool for the D2D communication may be determined according to the synchronization source type in the following manner: receiving an indication parameter for indicating a resource pool for the D2D communication when the synchronization source type is base station, for example, the indication parameter is borne in a PSBCH.

A resource pool for the D2D communication may be determined according to the synchronization source type in the following manner: receiving an indication parameter for indicating a resource pool for the D2D communication when the synchronization source type is UE, for example, the indication parameter is borne in a PSBCH. In this case, the indication parameter may indicate a D2D resource pool configuration directly, for example, the positions of the subframes and the frequency resource blocks of a D2D resource pool are indicated through a group of parameters. Alternatively, the indication parameter may also indicate the index of a resource pool configuration. For example, a group of D2D resource pool configuration pattern sets may be predefined, and each D2D resource pool configuration in the set includes the positions of subframes for D2D communication and/or those of frequency resource blocks for D2D communication. Each resource pool configuration corresponds to an index through which the positions of subframes for D2D communication and/or those of frequency resource blocks for D2D communication are indicated.

The D2D communication resource can be determined according to a predefined rule when the synchronization source type is UE. For example, the predefined rule is that a subframes numbered with specific numbers are subframes for D2D communication, for example, it may be specified that subframes 2/3/4/7/8/9 are all D2D subframes (numbered from 0-9).

A resource pool for the D2D communication is determined according to the TDD configuration, for example, all uplink subframes in the TDD configuration or all uplink subframes and special subframes in the TDD configuration or a part of uplink subframes in the TDD configuration are determined as the time-domain resource position of a resource pool for D2D communication.

In the foregoing example, when determining a resource pool for D2D communication, the method at least determines the positions of the subframes of the resource pool for D2D communication in the time domain. The frequency position of the resource pool for D2D communication, if not indicated, can also be appointed. For example, it may be appointed that in D2D subframes, the whole bandwidth of a system can be used for D2D communication or that a part of the whole bandwidth of a system, for example, a plurality of physical resource blocks in the central frequency band, is used for D2D communication.

At step S1210, D2D communication is conducted in the resource pool for D2D communication.

The UE conducts D2D communication in the resource pool after the resource pool for D2D communication is determined.

By executing the foregoing steps, a UE of a TDD system can determine a resource for D2D communication under any coverage condition, thereby conducting D2D communication.

In an example, the resource pool for D2D communication further includes a control resource pool for transmitting D2D control information (e.g. SCI) and a data resource pool for transmitting D2D data (PSSCH).

When a configuration parameter for indicating the resource pool for D2D communication is received, the control resource pool and/or the data resource pool are indicated in the configuration parameter.

When the resource pool for D2D communication is determined according to a predefined rule, the predefined rule synchronously defines subframes corresponding to the D2D control resource pool and those corresponding to the D2D data resource pool. For example, the predefined rule is that subframes 2/3/4/7/8/9 are D2D subframes. It may be appointed that the first two subframes are subframes in the D2D control resource pool and the last four subframes are subframes in the D2D data resource pool. Alternatively, it may be appointed that the first A (A being a specific number) D2D subframes in a resource period (e.g. a plurality of groups of subframes numbered 2/3/4/7/8/9 are included in a resource period, or it can be understood that a plurality of radio frames are included in a resource period) are subframes of the D2D control resource pool and the rest D2D subframes in the resource period are subframes of the D2D data resource pool.

It should be noted that Step 1206 is optional. For example, in a non-coverage scenario, a resource pool for D2D communication can be determined directly based on the foregoing method, that is, a resource pool for D2D communication can be determined according to a synchronization source type without determining a TDD configuration.

The D2D communication method provided in the embodiment realizes a D2D communication in a TDD system and especially addresses the problem of the determination of a resource for D2D communication for a UE of a TDD system in a partial coverage scenario or a non-coverage scenario, thus enabling a UE of a TDD system to conduct D2D communication under any coverage condition.

A D2D communication apparatus corresponding to the foregoing D2D communication method is also provided in the embodiment. Fig. 13 is a block diagram illustrating the structure of a D2D communication apparatus according to an embodiment of the present disclosure. As shown in Fig. 13, the apparatus includes: a synchronization module 132, a processing module 134 and a communication module 136 each of which is described in detail below.

The synchronization module 132 is arranged to detect a synchronization signal and determine a synchronization source type according to the detected synchronization signal. The processing module 134 is coupled with the synchronization module 132 and arranged to determine a resource pool for D2D communication according to the synchronization source type; or determine a TDD configuration according to the synchronization source type and then determine a resource pool for D2D communication according to the TDD configuration or determine a resource pool for D2D communication according to the TDD configuration and the synchronization source type. The communication module 136 is coupled with the processing module 134 and arranged to conduct D2D communication in the resource pool for D2D communication.

In the embodiment, different synchronization source types correspond to different synchronization signal sequences, and the synchronization source type at least includes base station and UE.

In the embodiment, the processing module 134 includes a third receiving module. The third receiving module is arranged to receive an indication parameter for indicating the TDD configuration which is born, for example, in a PSBCH when the synchronization source type is base station; and/or receive an indication parameter for indicating the TDD configuration which may be born, for example, in a PSBCH when the synchronization source type is UE. The processing module is arranged to determine the TDD configuration according to the indication parameter or according to pre-configured information of the TDD configuration or determine a predefined TDD configuration to be the TDD configuration. For example, the use of a predefined TDD configuration in a non-coverage region or in a case where the synchronization source type is UE is appointed by a system. The specific TDD configuration may be one of the seven configurations shown in Table 1, for example, it may be appointed that a TDD configuration x is used, where x=0-6.

In the embodiment, the processing module 134 includes a fourth receiving module. The fourth receiving module is arranged to receive an indication parameter for indicating a resource pool for D2D communication which is born, for example, in a PSBCH when the synchronization source type is base station, and/or receive an indication parameter for indicating a resource pool for D2D communication which may be borne in a PSBCH when the synchronization source type is UE. In this case, the indication parameter may directly indicate a D2D resource pool configuration. For example, the positions of the subframes and the frequency resource blocks of a D2D resource pool are indicated through a group of parameters. Alternatively, the indication parameter may also indicate the index of a resource pool configuration. For example, a group of D2D resource pool configuration pattern sets may be predefined, each D2D resource pool configuration in the set includes the positions of subframes for D2D communication and/or those of frequency resource blocks for D2D communication. Each resource pool configuration corresponds to an index through which the positions of subframes for D2D communication and/or those of frequency resource blocks for D2D communication are indicated.

Alternatively, the processing module is arranged to determine the D2D communication resource according to a predefined rule when the synchronization source type is UE. For example, the predefined rule is that subframes 2/3/4/7/8/9 are all D2D subframes.

Alternatively, the processing module is arranged to determine the D2D communication resource according to the TDD configuration when the synchronization source type is UE. All uplink subframes in the TDD configuration or all uplink subframes and special subframes in the TDD configuration or a part of uplink subframes in the TDD configuration are determined as time-domain resources for the D2D communication.

In the foregoing example, when determining the resource pool for D2D communication, the method at least determines the positions of the subframes of the resource pool for D2D communication in the time domain. The frequency position of the resource pool for D2D communication, if not indicated, can also be appointed. For example, it is appointed that in D2D subframes, the whole bandwidth of a system can be used for D2D communication or that a part of the whole bandwidth of a system, for example, a plurality of physical resource blocks in the central frequency band, is used for D2D communication.

In the embodiment, the resource pool for D2D communication includes a control resource pool for transmitting D2D control information and a data resource pool for transmitting D2D data. When a configuration parameter for indicating the resource pool for D2D communication is received, the configuration parameter includes a parameter for indicating the control resource pool and/or the data resource pool. When the resource pool for D2D communication is determined according to a predefined rule, the predefined rule is also used to determine the control resource pool and/or the data resource pool. A specific method for determining the D2D control resource pool and the D2D data resource pool can be understood with reference to the foregoing method embodiments and is therefore not described here repeatedly.

Further, the determination of the TDD configuration by the processing module is an optional operation. The processing module may directly determine the resource pool for D2D communication according to the synchronization source type.

In still another embodiment, a piece of software is provided which is executed to realize the technical solutions described in the foregoing embodiments and exemplary implementation modes.

In still another embodiment, a storage medium is provided which includes, but is not limited to: optical disk, floppy disk, hard disk and an erasable memory and on which the foregoing software is stored.

Apparently, it should be appreciated by those skilled in the art that each module or step described in the present disclosure can be realized by a universal computer and that the modules or steps may be integrated on a single computer or distributed on a network consisting of a plurality of computers, optionally, the modules or steps may be realized by executable program codes so that the modules or steps can be stored in a memory to be executed by a computer, and in some cases, the steps shown or described herein can be executed in a sequence different from this presented herein, or the modules or steps are formed into integrated circuit modules, or several of the modules or steps are formed into integrated circuit modules. Therefore, the present disclosure is not limited to the combination of specific hardware and software.

### Industrial Applicability

In conclusion, the D2D communication method and D2D communication apparatus provided herein have the following beneficial effects. The methods and the apparatuses address the scheduling problem existing in the direct communication of D2D UEs on the radio resource of a cellular communication system in the related art. In particular, facing the characteristic of a cellular system of TDD system that the ratio of uplink subframes to downlink subframes varies under different TDD configurations, the reliability of the transmission of D2D communication control information and data information and the flexibility of D2D communication scheduling under each TDD configuration for different types of services when D2D communication can only use uplink resources can be guaranteed.

## Claims

1. A Device-to-Device, D2D, communication method, carried out by a D2D UE sending terminal, comprising:
determining, according to a received D2D resource configuration parameter and/or stored radio resource pre-configuration information, a first resource set for transmitting D2D control information, wherein a resource allocation indication parameter for indicating a data resource is comprised in the D2D control information (S102);
determining a second resource for transmitting D2D data (S104); and
sending D2D control information in the first resource set and/or sending D2D data in the second resource (S106);
**characterized in that** sending the D2D data in the second resource comprises: determining the number of transmission times of the D2D data; and sending the D2D data according to the determined number of transmission times;
wherein the number of transmission times of the D2D data is determined according to an index of a resource pattern for transmission of the D2D data, or a resource pattern for transmission of the D2D data;
when the number of transmission times of the D2D data is determined at least according to the index of the resource pattern for transmission of the D2D data, the method further comprises: representing subframe positions of transmission resources by a resource pattern for transmission, wherein each resource pattern for transmission corresponds to more than one index value, and different index values correspond to different values for the number of transmission times; or predefining a plurality of resource pattern sets for transmission, wherein each resource pattern set for transmission corresponds to one value for the number of transmission times, and resource patterns for transmission comprised in different resource pattern sets for transmission are indicated by different indexes; and sending the index of the resource pattern for transmission through the D2D control information; or,
when the number of transmission times of the D2D data is determined at least according to the resource pattern for transmission of the D2D data, each resource pattern for transmission corresponds to one value for the number of transmission times, and each resource pattern for transmission corresponds to one index value; and an index for indicating the resource pattern for transmission is sent through the D2D control information.

2. The method as claimed in claim 1, wherein the second resource is determined according to at least one of the following information:
received D2D data transmission resource pool configuration information;
received transmission resource indication information for D2D data transmission; and
the stored radio resource pre-configuration information.

3. The method as claimed in claim 1, wherein
when a subframe in the first resource set or a subframe for transmitting the D2D control information is overlapped with a subframe in the second resource, only the D2D data is sent in the overlapped subframe; or,
when a subframe in the first resource set or a subframe for transmitting the D2D control information is overlapped with a subframe in the second resource, only the D2D control information is sent in the overlapped subframe; or,
when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D data is sent in the overlapped subframe; or,
when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D control information is sent in the overlapped subframe; or,
when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, the D2D control information and the D2D data are both sent in the overlapped subframe, and only the D2D control information or the D2D data is sent in the overlapped frequency-domain resource; or,
when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is orthogonal in position to a frequency-domain resource of the second resource, the D2D control information and the D2D data are both sent in the overlapped subframe.

4. A Device-to-Device, D2D, communication method, carried out by a D2D UE at a receiving side, comprising:
determining, according to a received D2D resource configuration parameter and/or stored radio resource pre-configuration information, a first resource set for transmitting D2D control information (S302);
receiving D2D control information in the first resource set, wherein a resource allocation indication parameter for indicating a data resource is comprised in the D2D control information (S304); and
receiving D2D data in the data source indicated by the D2D control information (S306);
**characterized in that** receiving the D2D data in the data resource comprises: determining the number of transmission times of the D2D data; and receiving the D2D data according to the determined number of transmission times; wherein the number of transmission times of the D2D data is determined according to an index of a resource pattern for transmission of the D2D data, or, a resource pattern for transmission of the D2D data;
when the number of transmission times of the D2D data is determined at least according to the index of the resource pattern for transmission of the D2D data, the method further comprises: receiving the index of the resource pattern for transmission of the D2D data, wherein subframe positions of transmission resources are represented by a resource pattern for transmission, one resource pattern for transmission corresponds to more than one index value, and different index values correspond to different values for the number of transmission times; or predefining a plurality of resource pattern sets for transmission, wherein each resource pattern set for transmission corresponds to one value for the number of transmission times, and resource patterns for transmission comprised in different resource pattern sets for transmission are indicated by different indexes, or,
when the number of transmission times of the D2D data is determined at least according to the resource pattern for transmission of the D2D data, the method further comprises: receiving a signaling for indicating the index of the resource pattern for transmission of the D2D data, wherein each resource pattern for transmission corresponds to one value for the number of transmission times, and each resource pattern for transmission corresponds to one index value.

5. The method as claimed in claim 4, wherein
when a subframe in the first resource set or a subframe for transmitting the D2D control information is overlapped with a subframe in the data resource, only the D2D data is received in the overlapped subframe; or,
when a subframe in the first resource set or a subframe for transmitting the D2D control information is overlapped with a subframe in the data resource, only the D2D control information is received in the overlapped subframe; or,
when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D data is received in the overlapped subframe; or,
when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D control information is received in the overlapped subframe; or,
when a subframe in the first resource set or a subframe for transmitting the D2D control information is overlapped with a subframe in the data resource, and in the overlapped subframe, a frequency-domain resource of the first resource set is orthogonal in position to a frequency-domain resource of the data resource, the D2D control information and the D2D data are both received in the overlapped subframe.

6. A D2D communication apparatus, configured in a D2D UE sending terminal, comprising:
a first determination module (22), arranged to determine, according to a received D2D resource configuration parameter and/or stored radio resource pre-configuration information, a first resource set for transmitting D2D control information, wherein a resource allocation indication parameter for indicating a data resource is comprised in the D2D control information;
the first determination module (22) is further arranged to determine a second resource for transmitting D2D data; and
a first sending module (24), arranged to send D2D control information in the first resource set and/or send D2D data in the second resource;
**characterized in that** the first determination module (22) is further arranged to determine the number of transmission times of the D2D data; and the first sending module (24) is further arranged to send the D2D data according to the determined number of transmission times; wherein the first determination module (22) determines the number of transmission times of the D2D data according to an index of a resource pattern for transmission of the D2D data, or, a resource pattern for transmission of the D2D data;
when the number of transmission times of the D2D data is determined at least according to the index of the resource pattern for transmission of the D2D data, subframe positions of transmission resources are represented by a resource pattern for transmission, wherein each resource pattern for transmission corresponds to more than one index value, and different index values correspond to different values for the number of transmission times; or a plurality of resource pattern sets for transmission are predefined, wherein each resource pattern set for transmission corresponds to one value for the number of transmission times, and resource patterns for transmission comprised in different resource pattern sets for transmission are indicated by different indexes; and the index of the resource pattern for transmission is comprised in the D2D control information sent by the first sending module (24), or,
when the number of transmission times of the D2D data is determined at least according to the resource pattern for transmission of the D2D data, each resource pattern for transmission corresponds to one value for the number of transmission times, and each resource pattern for transmission corresponds to one index value; and an index for indicating the resource pattern for transmission is comprised in the D2D control information sent by the first sending module (24)..

7. The apparatus as claimed in claim 6, wherein the second resource is determined according to at least one of the following information:
received D2D data transmission resource pool configuration information;
received transmission resource indication information for D2D data transmission; and
the stored radio resource pre-configuration information.

8. The apparatus as claimed in claim 6, wherein
when a subframe in the first resource set or a subframe for transmitting the D2D control information is overlapped with a subframe in the second resource, only the D2D data is sent in the overlapped subframe; or,
when a subframe in the first resource set or a subframe for transmitting the D2D control information is overlapped with a subframe in the second resource, only the D2D control information is sent in the overlapped subframe; or,
when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D data is sent in the overlapped subframe; or,
when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, only the D2D control information is sent in the overlapped subframe; or,
when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is overlapped in position with a frequency-domain resource of the second resource, the D2D control information and the D2D data are both sent in the overlapped subframe, and only the D2D control information or the D2D data is sent in the overlapped frequency-domain resource; or,
when a subframe in the first resource set or a subframe for transmitting the D2D control information is overlapped with a subframe in the second resource, and in the overlapped subframe, a frequency-domain resource of the first resource set or a frequency-domain resource for transmitting the D2D control information is orthogonal in position to a frequency-domain resource of the second resource, the D2D control information and the D2D data are both sent in the overlapped subframe.

9. A Device-to-Device, D2D, communication apparatus, configured in a D2D UE at a receiving side, comprising:
a second determination module (42), arranged to determine, according to a received D2D resource configuration parameter and/or stored radio resource pre-configuration information, a first resource set for transmitting D2D control information; and
a second receiving module (44), arranged to receive D2D control information in the first resource set, wherein a resource allocation indication parameter for indicating a data resource is comprised in the D2D control information, wherein
the second receiving module (44) is further arranged to receive D2D data in the data source indicated by the D2D control information;
**characterized in that**
the second determination module (42) is further arranged to determine the number of transmission times of the D2D data; and
the second receiving module (44) is further arranged to receive the D2D data according to the determined number of transmission times,
wherein the second determination module (42) is arranged to determine the number of transmission times of the D2D data according to an index of a resource pattern for transmission of the D2D data or a resource pattern for transmission of the D2D data;
when the number of transmission times of the D2D data is determined at least according to the index of the resource pattern for transmission of the D2D data, the second receiving module (44) is further arranged to receive the index of the resource pattern for transmission of the D2D data, wherein subframe positions of transmission resources are represented by a resource pattern for transmission, one resource pattern for transmission corresponds to more than one index value, and different index values correspond to different values for the number of transmission times; or predefine a plurality of resource pattern sets for transmission, wherein each resource pattern set for transmission corresponds to one value for the number of transmission times, and resource patterns for transmission comprised in different resource pattern sets for transmission are indicated by different indexes;
or,
when the number of transmission times of the D2D data is determined at least according to the resource pattern for transmission of the D2D data, the second receiving module (44) is further arranged to receive a signaling for indicating the index of the resource pattern for transmission of the D2D data, wherein each resource pattern for transmission corresponds to one value for the number of transmission times, and each resource pattern for transmission corresponds to one index value.

10. The apparatus as claimed in claim 9, wherein
when a subframe in the first resource set or a subframe for transmitting the D2D control information is overlapped with a subframe in the data resource, only the D2D data is received in the overlapped subframe; or,
when a subframe in the first resource set or a subframe for transmitting the D2D control information is overlapped with a subframe in the data resource, only the D2D control information is received in the overlapped subframe; or,
when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D data is received in the overlapped subframe; or,
when a subframe in the first resource set or a subframe for transmitting the D2D control information is overlapped with a subframe in the data resource, and in the overlapped subframe, a frequency-domain resource of the first resource set is overlapped in position with a frequency-domain resource of the data resource, only the D2D control information is received in the overlapped subframe; or,
when a subframe in the first resource set or a subframe for transmitting the D2D control information is overlapped with a subframe in the data resource, and in the overlapped subframe, a frequency-domain resource of the first resource set is orthogonal in position to a frequency-domain resource of the data resource, the D2D control information and the D2D data are both received in the overlapped subframe.

## Patentansprüche

1. Gerät-zu-Gerät, D2D, -Kommunikationsverfahren, das von einem D2D-UE-Sendeendgerät ausgeführt wird, umfassend:
Bestimmen eines ersten Ressourcensatzes zum Übertragen von D2D-Steuerinformationen gemäß einem empfangenen D2D-Ressourcenkonfigurationsparameter und/oder gespeicherten Funkressourcen-Vorkonfigurationsinformationen, wobei ein Ressourcenzuweisungsanzeigeparameter zum Anzeigen einer Datenressource in den D2D-Steuerinformationen enthalten ist (S102);
Bestimmen einer zweiten Ressource zum Übertragen von D2D-Daten (S 104); und
Senden von D2D-Steuerinformationen in dem ersten Ressourcensatz und/oder Senden von D2D-Daten in der zweiten Ressource (S106);
**dadurch gekennzeichnet, dass** Senden der D2D-Daten in der zweiten Ressource umfasst: Bestimmen der Anzahl von Übertragungszeiten der D2D-Daten; und Senden der D2D-Daten gemäß der bestimmten Anzahl von Übertragungszeiten;
wobei die Anzahl von Übertragungszeiten der D2D-Daten gemäß einem Index eines Ressourcenmusters zur Übertragung der D2D-Daten oder eines Ressourcenmusters zur Übertragung der D2D-Daten bestimmt wird;
wenn die Anzahl von Übertragungszeiten der D2D-Daten mindestens gemäß dem Index des Ressourcenmusters zur Übertragung der D2D-Daten bestimmt wird, das Verfahren ferner umfasst: Darstellen von Teilrahmenpositionen von Übertragungsressourcen durch ein Ressourcenmuster zur Übertragung, wobei jedes Ressourcenmuster zur Übertragung mehr als einem Indexwert entspricht, und unterschiedliche Indexwerte unterschiedlichen Werten für die Anzahl von Übertragungszeiten entsprechen; oder Vordefinieren einer Vielzahl von Ressourcenmustersätzen zur Übertragung, wobei jeder Ressourcenmustersatz zur Übertragung einem Wert für die Anzahl von Übertragungszeiten entspricht, und Ressourcenmuster zur Übertragung, die in verschiedenen Ressourcenmustersätzen zur Übertragung enthalten sind, durch unterschiedliche Indizes angezeigt werden; und Senden des Index des Ressourcenmusters zur Übertragung durch die D2D-Steuerinformationen; oder,
wenn die Anzahl von Übertragungszeiten der D2D-Daten mindestens gemäß dem Ressourcenmuster zur Übertragung der D2D-Daten bestimmt wird, jedes Ressourcenmuster zur Übertragung einem Wert für die Anzahl von Übertragungszeiten entspricht, und jedes Ressourcenmuster zur Übertragung einem Indexwert entspricht; und ein Index zum Anzeigen des Ressourcenmusters zur Übertragung durch die D2D-Steuerinformationen gesendet wird.

2. Verfahren nach Anspruch 1, wobei die zweite Ressource gemäß mindestens einer von den folgenden Informationen bestimmt wird:
empfangene Konfigurationsinformationen für den D2D-Datenübertragungsressourcenpool;
empfangene Übertragungsressourcenanzeigeinformationen für die D2D-Datenübertragung; und
die gespeicherten Funkressourcen-Vorkonfigurationsinformationen.

3. Verfahren nach Anspruch 1, wobei,
wenn ein Teilrahmen im ersten Ressourcensatz oder ein Teilrahmen zum Übertragen der D2D-Steuerinformationen mit einem Teilrahmen in der zweiten Ressource überlappt wird, nur die D2D-Daten in dem überlappten Teilrahmen gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, nur die D2D-Steuerinformationen in dem überlappten Teilrahmen gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, und in dem überlappten Teilrahmen eine Frequenzdomänenressource des ersten Ressourcensatzes oder eine Frequenzdomänenressource zum Übertragen der D2D-Steuerinformationen in Position mit einer Frequenzdomänenressource der zweiten Ressource überlappt wird, nur die D2D-Daten in dem überlappten Teilrahmen gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, und in dem überlappten Teilrahmen eine Frequenzdomänenressource des ersten Ressourcensatzes oder eine Frequenzdomänenressource zum Übertragen der D2D-Steuerinformationen in Position mit einer Frequenzdomänenressource der zweiten Ressource überlappt wird, nur die D2D-Steuerinformationen in dem überlappten Teilrahmen gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, und im überlappten Teilrahmen eine Frequenzdomänenressource des ersten Ressourcensatzes oder eine Frequenzdomänenressource zum Übertragen der D2D-Steuerinformationen in Position mit einer Frequenzdomänenressource der zweiten Ressource überlappt wird, die D2D-Steuerinformationen und die D2D-Daten beide in dem überlappten Teilrahmen gesendet werden, und nur die D2D-Steuerinformationen oder nur die D2D-Daten in der überlappten Frequenzdomänenressource gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, und in dem überlappten Teilrahmen eine Frequenzdomänenressource des ersten Ressourcensatzes oder eine Frequenzdomänenressource zum Übertragen der D2D-Steuerinformationen orthogonal in Position zu einer Frequenzdomänenressource der zweiten Ressource erfolgt, die D2D-Steuerinformationen und die D2D-Daten beide in dem überlappten Teilrahmen gesendet werden.

4. Gerät-zu-Gerät, D2D, -Kommunikationsverfahren, das von einem D2D-UE auf einer Empfangsseite ausgeführt wird, umfassend:
Bestimmen eines ersten Ressourcensatzes zum Übertragen von D2D-Steuerinformationen gemäß einem empfangenen D2D-Ressourcenkonfigurationsparameter und/oder gespeicherten Funkressourcen-Vorkonfigurationsinformationen (S302);
Empfangen von D2D-Steuerinformationen in dem ersten Ressourcensatz, wobei ein Ressourcenzuweisungsanzeigeparameter zum Anzeigen einer Datenressource in den D2D-Steuerinformationen enthalten ist (S304); und
Empfangen von D2D-Daten in der Datenquelle, die durch die D2D-Steuerinformationen angegeben ist (S306);
**dadurch gekennzeichnet, dass** Empfangen der D2D-Daten in der Datenressource umfasst: Bestimmen der Anzahl von Übertragungszeiten der D2D-Daten; und Empfangen der D2D-Daten gemäß der bestimmten Anzahl von Übertragungszeiten; wobei die Anzahl von Übertragungszeiten der D2D-Daten gemäß einem Index eines Ressourcenmusters zur Übertragung der D2D-Daten oder eines Ressourcenmusters zur Übertragung der D2D-Daten bestimmt wird;
wenn die Anzahl von Übertragungszeiten der D2D-Daten mindestens gemäß dem Index des Ressourcenmusters zur Übertragung der D2D-Daten bestimmt wird, das Verfahren ferner umfasst: Empfangen des Index des Ressourcenmusters zur Übertragung der D2D-Daten, wobei Teilrahmenpositionen von Übertragungsressourcen durch ein Ressourcenmuster zur Übertragung dargestellt werden, ein Ressourcenmuster zur Übertragung mehr als einem Indexwert entspricht, und unterschiedliche Indexwerte unterschiedlichen Werten für die Anzahl von Übertragungszeiten entsprechen; oder Vordefinieren einer Vielzahl von Ressourcenmustersätzen zur Übertragung, wobei jeder Ressourcenmustersatz zur Übertragung einem Wert für die Anzahl von Übertragungszeiten entspricht, und Ressourcenmuster zur Übertragung, die in verschiedenen Ressourcenmustersätzen zur Übertragung enthalten sind, durch unterschiedliche Indizes angezeigt werden, oder,
wenn die Anzahl von Übertragungszeiten der D2D-Daten mindestens gemäß dem Ressourcenmuster zur Übertragung der D2D-Daten bestimmt wird, das Verfahren ferner umfasst: Empfangen einer Signalgebung zum Anzeigen des Index des Ressourcenmusters zur Übertragung der D2D-Daten, wobei jedes Ressourcenmuster zur Übertragung einem Wert für die Anzahl von Übertragungszeiten entspricht, und jedes Ressourcenmuster zur Übertragung einem Indexwert entspricht.

5. Verfahren nach Anspruch 4, wobei,
wenn ein Teilrahmen im ersten Ressourcensatz oder ein Teilrahmen zum Übertragen der D2D-Steuerinformationen mit einem Teilrahmen in der Datenressource überlappt wird, nur die D2D-Daten in dem überlappten Teilrahmen empfangen werden; oder,
wenn ein Teilrahmen im ersten Ressourcensatz oder ein Teilrahmen zum Übertragen der D2D-Steuerinformationen mit einem Teilrahmen in der Datenressource überlappt wird, nur die D2D-Steuerinformationen in dem überlappten Teilrahmen empfangen werden; oder,
wenn ein Teilrahmen im ersten Ressourcensatz oder ein Teilrahmen zum Übertragen der D2D-Steuerinformationen mit einem Teilrahmen in der Datenressource überlappt wird, und in dem überlappten Teilrahmen eine Frequenzdomänenressource des ersten Ressourcensatzes in Position mit einer Frequenzdomänenressource der Datenressource überlappt wird, nur die D2D-Daten in dem überlappten Teilrahmen empfangen werden; oder,
wenn ein Teilrahmen im ersten Ressourcensatz oder ein Teilrahmen zum Übertragen der D2D-Steuerinformationen mit einem Teilrahmen in der Datenressource überlappt wird, und in dem überlappten Teilrahmen eine Frequenzdomänenressource des ersten Ressourcensatzes in Position mit einer Frequenzdomänenressource der Datenressource überlappt wird, nur die D2D-Steuerinformationen in dem überlappten Teilrahmen empfangen werden; oder,
wenn ein Teilrahmen im ersten Ressourcensatz oder ein Teilrahmen zum Übertragen der D2D-Steuerinformationen mit einem Teilrahmen in der Datenressource überlappt wird, und in dem überlappten Teilrahmen eine Frequenzdomänenressource des ersten Ressourcensatzes orthogonal in Position mit einer Frequenzdomänenressource der Datenressource überlappt wird, die D2D-Steuerinformationen und die D2D-Daten beide in dem überlappten Teilrahmen empfangen werden.

6. D2D-Kommunikationsvorrichtung, die in einem D2D-UE-Sendeendgerät konfiguriert ist, umfassend:
ein erstes Bestimmungsmodul (22), das angeordnet ist, um einen ersten Ressourcensatz zum Übertragen von D2D-Steuerinformationen gemäß einem empfangenen D2D-Ressourcenkonfigurationsparameter und/oder gespeicherten Funkressourcen-Vorkonfigurationsinformationen zu bestimmen, wobei ein Ressourcenzuweisungsanzeigeparameter zum Anzeigen einer Datenressource in den D2D-Steuerinformationen enthalten ist;
das erste Bestimmungsmodul (22) ferner angeordnet ist, um eine zweite Ressource zum Übertragen von D2D-Daten zu bestimmen; und
ein erstes Sendemodul (24), das angeordnet ist, um D2D-Steuerinformationen in dem ersten Ressourcensatz zu senden und/oder D2D-Daten in der zweiten Ressource zu senden;
**dadurch gekennzeichnet, dass** das erste Bestimmungsmodul (22) ferner angeordnet ist, um die Anzahl von Übertragungszeiten der D2D-Daten zu bestimmen; und das erste Sendemodul (24) ferner angeordnet ist, um die D2D-Daten gemäß der bestimmten Anzahl von Übertragungszeiten zu senden; wobei das erste Bestimmungsmodul (22) die Anzahl von Übertragungszeiten der D2D-Daten gemäß einem Index eines Ressourcenmusters zur Übertragung der D2D-Daten oder eines Ressourcenmusters zur Übertragung der D2D-Daten bestimmt;
wenn die Anzahl von Übertragungszeiten der D2D-Daten mindestens gemäß dem Index des Ressourcenmusters zur Übertragung der D2D-Daten bestimmt wird, Teilrahmenpositionen von Übertragungsressourcen durch ein Ressourcenmuster zur Übertragung dargestellt werden, wobei jedes Ressourcenmuster zur Übertragung mehr als einem Indexwert entspricht, und unterschiedliche Indexwerte unterschiedlichen Werten für die Anzahl von Übertragungszeiten entsprechen; oder eine Vielzahl von Ressourcenmustersätzen zur Übertragung vordefiniert wird, wobei jeder Ressourcenmustersatz zur Übertragung einem Wert für die Anzahl von Übertragungszeiten entspricht, und Ressourcenmuster zur Übertragung, die in verschiedenen Ressourcenmustersätzen zur Übertragung enthalten sind, durch unterschiedliche Indizes angezeigt werden; und der Index des Ressourcenmusters zur Übertragung in den D2D-Steuerinformationen enthalten ist, die durch das erste Sendemodul (24) gesendet werden; oder,
wenn die Anzahl von Übertragungszeiten der D2D-Daten mindestens gemäß dem Ressourcenmuster zur Übertragung der D2D-Daten bestimmt wird, jedes Ressourcenmuster zur Übertragung einem Wert für die Anzahl von Übertragungszeiten entspricht, und jedes Ressourcenmuster zur Übertragung einem Indexwert entspricht; und ein Index zum Anzeigen des Ressourcenmusters zur Übertragung in den D2D-Steuerinformationen umfasst ist, die durch das erste Sendemodul (24) gesendet werden.

7. Vorrichtung nach Anspruch 6, wobei die zweite Ressource gemäß mindestens einer von den folgenden Informationen bestimmt wird:
empfangene Konfigurationsinformationen für den D2D-Datenübertragungsressourcenpool;
empfangene Übertragungsressourcenanzeigeinformationen für die D2D-Datenübertragung; und
die gespeicherten Funkressourcen-Vorkonfigurationsinformationen.

8. Verfahren nach Anspruch 6, wobei
wenn ein Teilrahmen im ersten Ressourcensatz oder ein Teilrahmen zum Übertragen der D2D-Steuerinformationen mit einem Teilrahmen in der zweiten Ressource überlappt wird, nur die D2D-Daten in dem überlappten Teilrahmen gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, nur die D2D-Steuerinformationen in dem überlappten Teilrahmen gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, und in dem überlappten Teilrahmen eine Frequenzdomänenressource des ersten Ressourcensatzes oder eine Frequenzdomänenressource zum Übertragen der D2D-Steuerinformationen in Position mit einer Frequenzdomänenressource der zweiten Ressource überlappt wird, nur die D2D-Daten in dem überlappten Teilrahmen gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, und in dem überlappten Teilrahmen eine Frequenzdomänenressource des ersten Ressourcensatzes oder eine Frequenzdomänenressource zum Übertragen der D2D-Steuerinformationen in Position mit einer Frequenzdomänenressource der zweiten Ressource überlappt wird, nur die D2D-Steuerinformationen in dem überlappten Teilrahmen gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, und im überlappten Teilrahmen eine Frequenzdomänenressource des ersten Ressourcensatzes oder eine Frequenzdomänenressource zum Übertragen der D2D-Steuerinformationen in Position mit einer Frequenzdomänenressource der zweiten Ressource überlappt wird, die D2D-Steuerinformationen und die D2D-Daten beide in dem überlappten Teilrahmen gesendet werden, und nur die D2D-Steuerinformationen oder nur die D2D-Daten in der überlappten Frequenzdomänenressource gesendet werden; oder,
wenn ein Teilrahmen im ersten Ressourcensatz oder ein Teilrahmen zum Übertragen der D2D-Steuerinformationen mit einem Teilrahmen in der zweiten Ressource überlappt wird, und in dem überlappten Teilrahmen eine Frequenzdomänenressource des ersten Ressourcensatzes oder eine Frequenzdomänenressource zum Übertragen der D2D-Steuerinformationen orthogonal in Position zu einer Frequenzdomänenressource der zweiten Ressource erfolgt, die D2D-Steuerinformationen und die D2D-Daten beide in dem überlappten Teilrahmen gesendet werden.

9. Gerät-zu-Gerät, D2D, -Kommunikationsvorrichtung, die in einem D2D-UE auf einer Empfangsseite konfiguriert ist, umfassend:
ein zweites Bestimmungsmodul (42), das angeordnet ist, um einen ersten Ressourcensatz zum Übertragen von D2D-Steuerinformationen gemäß einem empfangenen D2D-Ressourcenkonfigurationsparameter und/oder gespeicherten Funkressourcen-Vorkonfigurationsinformationen zu bestimmen; und
ein zweites Empfangsmodul (44), das angeordnet ist, um D2D-Steuerinformationen in dem ersten Ressourcensatz zu empfangen, wobei ein Ressourcenzuweisungsanzeigeparameter zum Anzeigen einer Datenressource in den D2D-Steuerinformationen umfasst ist, wobei
das zweite Empfangsmodul (44) ferner angeordnet ist, um D2D-Daten in der Datenquelle zu empfangen, die durch die D2D-Steuerinformationen angegeben ist;
**dadurch gekennzeichnet, dass** das zweite Bestimmungsmodul (42) ferner angeordnet ist, um die Anzahl von Übertragungszeiten der D2D-Daten zu bestimmen; und
das zweite Empfangsmodul (44) ferner angeordnet ist, um die D2D-Daten gemäß der bestimmten Anzahl von Übertragungszeiten zu empfangen,
wobei das zweite Bestimmungsmodul (42) angeordnet ist, um die Anzahl von Übertragungszeiten der D2D-Daten gemäß einem Index eines Ressourcenmusters zur Übertragung der D2D-Daten oder eines Ressourcenmusters zur Übertragung der D2D-Daten zu bestimmen;
wenn die Anzahl von Übertragungszeiten der D2D-Daten mindestens gemäß dem Index des Ressourcenmusters zur Übertragung der D2D-Daten bestimmt wird, das zweite Empfangsmodul (44) ferner zum Empfangen des Index des Ressourcenmusters zur Übertragung der D2D-Daten angeordnet ist, wobei Teilrahmenpositionen von Übertragungsressourcen durch ein Ressourcenmuster zur Übertragung dargestellt werden, ein Ressourcenmuster zur Übertragung mehr als einem Indexwert entspricht, und unterschiedliche Indexwerte unterschiedlichen Werten für die Anzahl von Übertragungszeiten entsprechen; oder Vordefinieren einer Vielzahl von Ressourcenmustersätzen zur Übertragung, wobei jeder Ressourcenmustersatz zur Übertragung einem Wert für die Anzahl von Übertragungszeiten entspricht, und Ressourcenmuster zur Übertragung, die in verschiedenen Ressourcenmustersätzen zur Übertragung enthalten sind, durch unterschiedliche Indizes angezeigt werden;
oder,
wenn die Anzahl von Übertragungszeiten der D2D-Daten mindestens gemäß dem Ressourcenmuster zur Übertragung der D2D-Daten bestimmt wird, das zweite Empfangsmodul (44) ferner zum Empfangen einer Signalgebung zum Anzeigen des Index des Ressourcenmusters zur Übertragung der D2D-Daten angeordnet ist, wobei jedes Ressourcenmuster zur Übertragung einem Wert für die Anzahl von Übertragungszeiten entspricht, und jedes Ressourcenmuster zur Übertragung einem Indexwert entspricht.

10. Vorrichtung nach Anspruch 9, wobei,
wenn ein Teilrahmen im ersten Ressourcensatz oder ein Teilrahmen zum Übertragen der D2D-Steuerinformationen mit einem Teilrahmen in der Datenressource überlappt wird, nur die D2D-Daten in dem überlappten Teilrahmen empfangen werden; oder,
wenn ein Teilrahmen im ersten Ressourcensatz oder ein Teilrahmen zum Übertragen der D2D-Steuerinformationen mit einem Teilrahmen in der Datenressource überlappt wird, nur die D2D-Steuerinformationen in dem überlappten Teilrahmen empfangen werden; oder,
wenn ein Teilrahmen im ersten Ressourcensatz oder ein Teilrahmen zum Übertragen der D2D-Steuerinformationen mit einem Teilrahmen in der Datenressource überlappt wird, und in dem überlappten Teilrahmen eine Frequenzdomänenressource des ersten Ressourcensatzes in Position mit einer Frequenzdomänenressource der Datenressource überlappt wird, nur die D2D-Daten in dem überlappten Teilrahmen empfangen werden; oder,
wenn ein Teilrahmen im ersten Ressourcensatz oder ein Teilrahmen zum Übertragen der D2D-Steuerinformationen mit einem Teilrahmen in der Datenressource überlappt wird, und in dem überlappten Teilrahmen eine Frequenzdomänenressource des ersten Ressourcensatzes in Position mit einer Frequenzdomänenressource der Datenressource überlappt wird, nur die D2D-Steuerinformationen in dem überlappten Teilrahmen empfangen werden; oder,
wenn ein Teilrahmen im ersten Ressourcensatz oder ein Teilrahmen zum Übertragen der D2D-Steuerinformationen mit einem Teilrahmen in der Datenressource überlappt wird, und in dem überlappten Teilrahmen eine Frequenzdomänenressource des ersten Ressourcensatzes orthogonal in Position mit einer Frequenzdomänenressource der Datenressource überlappt wird, die D2D-Steuerinformationen und die D2D-Daten beide in dem überlappten Teilrahmen empfangen werden.

## Revendications

1. Procédé de communication de dispositif à dispositif, D2D, mis en œuvre par un terminal émetteur D2D d'UE, comprenant :
la détermination, selon un paramètre de configuration de ressources D2D reçu et/ou des informations de pré-configuration de ressources radio stockées, d'un premier ensemble de ressources pour transmettre des informations de commande D2D, dans lequel un paramètre d'indication d'allocation de ressources pour indiquer une ressource de données est compris dans les informations de commande D2D (S 102) ;
la détermination d'une seconde ressource pour transmettre des données D2D (S 104) ; et
l'envoi des informations de commande D2D dans le premier ensemble de ressources et/ou l'envoi des données D2D dans la seconde ressource (S 106) ;
**caractérisé en ce que** l'envoi des données D2D dans la seconde ressource comprend : la détermination du nombre d'occurrences de transmission des données D2D ; et l'envoi des données D2D selon le nombre déterminé d'occurrences de transmission ;
dans lequel le nombre d'occurrences de transmission des données D2D est déterminé selon un indice d'un modèle de ressources pour la transmission des données D2D ou un modèle de ressources pour la transmission des données D2D ;
lorsque le nombre d'occurrences de transmission des données D2D est déterminé au moins selon l'indice du modèle de ressources pour la transmission des données D2D, le procédé comprend en outre : la représentation des positions de sous-trame des ressources de transmission par un modèle de ressources pour la transmission, dans lequel chaque modèle de ressources pour la transmission correspond à plus d'une valeur d'indice et différentes valeurs d'indice correspondent à différentes valeurs pour le nombre d'occurrences de transmission ; ou la pré-définition d'une pluralité d'ensembles de modèles de ressources pour la transmission, dans lequel chaque ensemble de modèles de ressources pour la transmission correspond à une valeur pour le nombre d'occurrences de transmission et les modèles de ressources pour la transmission compris dans différents ensembles de modèles de ressources pour la transmission sont indiqués par différents indices ; et l'envoi de l'indice du modèle de ressources pour la transmission par l'intermédiaire des informations de commande D2D ; ou,
lorsque le nombre d'occurrences de transmission des données D2D est déterminé au moins selon le modèle de ressources pour la transmission des données D2D, chaque modèle de ressources pour la transmission correspond à une valeur pour le nombre d'occurrences de transmission et chaque modèle de ressources pour la transmission correspond à une valeur d'indice ; et un indice pour indiquer le modèle de ressources pour la transmission est envoyé par le biais des informations de commande D2D.

2. Procédé selon la revendication 1, dans lequel la seconde ressource est déterminée selon au moins l'une des informations suivantes :
des informations de configuration de pool de ressources de transmission de données D2D reçues ;
des informations d'indication de ressources de transmission reçues pour la transmission de données D2D ; et
des informations de pré-configuration des ressources radio stockées.

3. Procédé selon la revendication 1, dans lequel
lorsqu'une sous-trame dans le premier ensemble de ressources ou une sous-trame pour transmettre les informations de commande D2D est chevauchée par une sous-trame dans la seconde ressource, seules les données D2D sont envoyées dans la sous-trame chevauchée ; ou,
lorsqu'une sous-trame dans le premier ensemble de ressources ou une sous-trame pour transmettre les informations de commande D2D est chevauchée par une sous-trame dans la seconde ressource, seules les informations de commande D2D sont envoyées dans la sous-trame chevauchée ; ou,
lorsqu'une sous-trame dans le premier ensemble de ressources ou une sous-trame pour transmettre les informations de commande D2D est chevauchée par une sous-trame dans la seconde ressource et dans la sous-trame chevauchée, une ressource de domaine-fréquence du premier ensemble de ressources ou une ressource de domaine-fréquence pour la transmission des informations de commande D2D est chevauchée en position par une ressource de domaine-fréquence de la seconde ressource, seules les données D2D sont envoyées dans la sous-trame chevauchée ; ou,
lorsqu'une sous-trame dans le premier ensemble de ressources ou une sous-trame pour transmettre les informations de commande D2D est chevauchée par une sous-trame dans la seconde ressource et dans la sous-trame chevauchée, une ressource de domaine-fréquence du premier ensemble de ressources ou une ressource de domaine-fréquence pour la transmission des informations de commande D2D est chevauchée en position par une ressource de domaine-fréquence de la seconde ressource, seules les informations de commande D2D sont envoyées dans la sous-trame chevauchée ; ou,
lorsqu'une sous-trame dans le premier ensemble de ressources ou une sous-trame pour transmettre les informations de commande D2D est chevauchée par une sous-trame dans la seconde ressource et dans la sous-trame chevauchée, une ressource de domaine-fréquence du premier ensemble de ressources ou une ressource de domaine-fréquence pour la transmission des informations de commande D2D est chevauchée en position par une ressource de domaine-fréquence de la seconde ressource, les informations de commande D2D et les données D2D sont toutes deux envoyées dans la sous-trame chevauchée et seules les informations de commande D2D ou les données D2D sont envoyées dans la ressource de domaine-fréquence chevauchée ; ou,
lorsqu'une sous-trame dans le premier ensemble de ressources ou une sous-trame pour transmettre les informations de commande D2D est chevauchée par une sous-trame dans la seconde ressource et dans la sous-trame chevauchée, une ressource de domaine-fréquence du premier ensemble de ressources ou une ressource de domaine-fréquence pour la transmission des informations de commande D2D est orthogonale en position à une ressource de domaine-fréquence de la seconde ressource, les informations de commande D2D et les données D2D sont toutes deux envoyées dans la sous-trame chevauchée.

4. Procédé de communication de dispositif à dispositif, D2D, mis en œuvre par un UE D2D d'un côté réception, comprenant :
la détermination, selon un paramètre de configuration de ressources D2D reçu et/ou des informations de pré-configuration de ressources radio stockées, d'un premier ensemble de ressources pour transmettre des informations de commande D2D (S302) ;
la réception des informations de commande D2D dans le premier ensemble de ressources, dans lequel un paramètre d'indication d'allocation de ressources pour indiquer une ressource de données est compris dans les informations de commande D2D (S304) ; et
la réception des données D2D dans la source de données indiquée par les informations de commande D2D (S306) ;
**caractérisé en ce que** la réception des données D2D dans la ressource de données comprend : la détermination du nombre d'occurrences de transmission des données D2D ; et la réception des données D2D selon le nombre déterminé d'occurrences de transmission ; dans lequel le nombre d'occurrences de transmission des données D2D est déterminé selon un indice d'un modèle de ressources pour la transmission des données D2D ou un modèle de ressources pour la transmission des données D2D ;
lorsque le nombre d'occurrences de transmission des données D2D est déterminé au moins selon l'indice du modèle de ressources pour la transmission des données D2D, le procédé comprend en outre : la réception de l'indice du modèle de ressources pour la transmission des données D2D, dans lequel les positions de sous-trame des ressources de transmission sont représentées par un modèle de ressources pour la transmission, un modèle de ressources pour la transmission correspond à plus d'une valeur d'indice et différentes valeurs d'indice correspondent à différentes valeurs pour le nombre d'occurrences de transmission ; ou la pré-définition d'une pluralité d'ensembles de modèles de ressources pour la transmission, dans lequel chaque ensemble de modèles de ressources pour la transmission correspond à une valeur pour le nombre d'occurrences de transmission et les modèles de ressources pour la transmission compris dans différents ensembles de modèles de ressources pour la transmission sont indiqués par différents indices ou,
lorsque le nombre d'occurrences de transmission des données D2D est déterminé au moins selon le modèle de ressources pour la transmission des données D2D, le procédé comprend en outre : la réception d'une signalisation pour indiquer l'indice du modèle de ressources pour la transmission des données D2D, dans lequel chaque modèle de ressources pour la transmission correspond à une valeur pour le nombre d'occurrences de transmission et chaque modèle de ressources pour la transmission correspond à une valeur d'indice.

5. Procédé selon la revendication 4, dans lequel
lorsqu'une sous-trame dans le premier ensemble de ressources ou une sous-trame pour transmettre les informations de commande D2D est chevauchée par une sous-trame dans la ressource de données, seules les données D2D sont reçues dans la sous-trame chevauchée ; ou,
lorsqu'une sous-trame dans le premier ensemble de ressources ou une sous-trame pour transmettre les informations de commande D2D est chevauchée par une sous-trame dans la ressource de données, seules les informations de commande D2D sont reçues dans la sous-trame chevauchée ; ou,
lorsqu'une sous-trame dans le premier ensemble de ressources ou une sous-trame pour transmettre les informations de commande D2D est chevauchée par une sous-trame dans la ressource de données et dans la sous-trame chevauchée, une ressource de domaine-fréquence du premier ensemble de ressources est chevauchée en position par une ressource de domaine-fréquence de la ressource de données, seules les données D2D sont reçues dans la sous-trame chevauchée ; ou,
lorsqu'une sous-trame dans le premier ensemble de ressources ou une sous-trame pour transmettre les informations de commande D2D est chevauchée par une sous-trame dans la ressource de données et dans la sous-trame chevauchée, une ressource de domaine-fréquence du premier ensemble de ressources est chevauchée en position par une ressource de domaine-fréquence de la ressource de données, seules les informations de commande D2D sont reçues dans la sous-trame chevauchée ; ou,
lorsqu'une sous-trame dans le premier ensemble de ressources ou une sous-trame pour transmettre les informations de commande D2D est chevauchée par une sous-trame dans la ressource de données et dans la sous-trame chevauchée, une ressource de domaine-fréquence du premier ensemble de ressources est orthogonale en position à une ressource de domaine-fréquence de la ressource de données, les informations de commande D2D et les données D2D sont toutes deux reçues dans la sous-trame chevauchée.

6. Appareil de communication D2D, configuré dans un terminal émetteur D2D d'UE, comprenant :
un premier module de détermination (22), agencé pour déterminer, selon un paramètre de configuration de ressources D2D reçu et/ou des informations de pré-configuration de ressources radio stockées, un premier ensemble de ressources pour transmettre des informations de commande D2D, dans lequel un paramètre d'indication d'allocation de ressources pour indiquer une ressource de données est compris dans les informations de commande D2D ;
le premier module de détermination (22) est en outre agencé pour déterminer une seconde ressource pour transmettre des données D2D ; et
un premier module d'envoi (24), agencé pour envoyer des informations de commande D2D dans le premier ensemble de ressources et/ou envoyer des données D2D dans la seconde ressource ;
**caractérisé en ce que** le premier module de détermination (22) est en outre agencé pour déterminer le nombre d'occurrences de transmission des données D2D ; et le premier module d'envoi (24) est en outre agencé pour envoyer les données D2D selon le nombre déterminé d'occurrences de transmission ; dans lequel le premier module de détermination (22) détermine le nombre d'occurrences de transmission des données D2D selon un indice d'un modèle de ressources pour la transmission des données D2D ou un modèle de ressources pour la transmission des données D2D ;
lorsque le nombre d'occurrences de transmission des données D2D est déterminé au moins selon l'indice du modèle de ressources pour la transmission des données D2D, les positions de sous-trame des ressources de transmission sont représentées par un modèle de ressources pour la transmission, dans lequel chaque modèle de ressources pour la transmission correspond à plus d'une valeur d'indice et différentes valeurs d'indice correspondent à des valeurs différentes pour le nombre d'occurrences de transmission ; ou une pluralité d'ensembles de modèles de ressources pour la transmission sont prédéfinis, dans lequel chaque ensemble de modèles de ressources pour la transmission correspond à une valeur pour le nombre d'occurrences de transmission et les modèles de ressources pour la transmission compris dans différents ensembles de modèles de ressources pour la transmission sont indiqués par différents indices ; et l'indice du modèle de ressources pour la transmission est compris dans les informations de commande D2D envoyées par le premier module d'envoi (24) ou,
lorsque le nombre d'occurrences de transmission des données D2D est déterminé au moins selon le modèle de ressources pour la transmission des données D2D, chaque modèle de ressources pour la transmission correspond à une valeur pour le nombre d'occurrences de transmission et chaque modèle de ressources pour la transmission correspond à une valeur d'indice ; et un indice pour indiquer le modèle de ressources pour la transmission est compris dans les informations de commande D2D envoyées par le premier module d'envoi (24).

7. Appareil selon la revendication 6, dans lequel la seconde ressource est déterminée selon au moins l'une des informations suivantes :
des informations de configuration de pool de ressources de transmission de données D2D reçues ;
des informations d'indication de ressources de transmission reçues pour la transmission de données D2D ; et
des informations de pré-configuration des ressources radio stockées.

8. Appareil selon la revendication 6, dans lequel
lorsqu'une sous-trame dans le premier ensemble de ressources ou une sous-trame pour transmettre les informations de commande D2D est chevauchée par une sous-trame dans la seconde ressource, seules les données D2D sont envoyées dans la sous-trame chevauchée ; ou,
lorsqu'une sous-trame dans le premier ensemble de ressources ou une sous-trame pour transmettre les informations de commande D2D est chevauchée par une sous-trame dans la seconde ressource, seules les informations de commande D2D sont envoyées dans la sous-trame chevauchée ; ou,
lorsqu'une sous-trame dans le premier ensemble de ressources ou une sous-trame pour transmettre les informations de commande D2D est chevauchée par une sous-trame dans la seconde ressource et dans la sous-trame chevauchée, une ressource de domaine-fréquence du premier ensemble de ressources ou une ressource de domaine-fréquence pour la transmission des informations de commande D2D est chevauchée en position par une ressource de domaine-fréquence de la seconde ressource, seules les données D2D sont envoyées dans la sous-trame chevauchée ; ou,
lorsqu'une sous-trame dans le premier ensemble de ressources ou une sous-trame pour transmettre les informations de commande D2D est chevauchée par une sous-trame dans la seconde ressource et dans la sous-trame chevauchée, une ressource de domaine-fréquence du premier ensemble de ressources ou une ressource de domaine-fréquence pour la transmission des informations de commande D2D est chevauchée en position par une ressource de domaine-fréquence de la seconde ressource, seules les informations de commande D2D sont envoyées dans la sous-trame chevauchée ; ou,
lorsqu'une sous-trame dans le premier ensemble de ressources ou une sous-trame pour transmettre les informations de commande D2D est chevauchée par une sous-trame dans la seconde ressource et dans la sous-trame chevauchée, une ressource de domaine-fréquence du premier ensemble de ressources ou une ressource de domaine-fréquence pour la transmission des informations de commande D2D est chevauchée en position par une ressource de domaine-fréquence de la seconde ressource, les informations de commande D2D et les données D2D sont toutes deux envoyées dans la sous-trame chevauchée et seules les informations de commande D2D ou les données D2D sont envoyées dans la ressource de domaine-fréquence chevauchée ; ou,
lorsqu'une sous-trame dans le premier ensemble de ressources ou une sous-trame pour transmettre les informations de commande D2D est chevauchée par une sous-trame dans la seconde ressource et dans la sous-trame chevauchée, une ressource de domaine-fréquence du premier ensemble de ressources ou une ressource de domaine-fréquence pour la transmission des informations de commande D2D est orthogonale en position à une ressource de domaine-fréquence de la seconde ressource, les informations de commande D2D et les données D2D sont toutes deux envoyées dans la sous-trame chevauchée.

9. Appareil de communication de dispositif à dispositif, D2D, configuré dans un UE D2D d'un côté de réception, comprenant :
un second module de détermination (42), agencé pour déterminer, selon un paramètre de configuration de ressources D2D reçu et/ou des informations de pré-configuration de ressources radio stockées, un premier ensemble de ressources pour transmettre des informations de commande D2D ; et
un second module de réception (44), agencé pour recevoir des informations de commande D2D dans le premier ensemble de ressources, dans lequel un paramètre d'indication d'allocation de ressources pour indiquer une ressource de données est compris dans les informations de commande D2D, dans lequel
le second module de réception (44) est en outre agencé pour recevoir des données D2D dans la source de données indiquée par les informations de commande D2D ;
**caractérisé en ce que** le second module de détermination (42) est en outre agencé pour déterminer le nombre d'occurrences de transmission des données D2D ; et
le second module de réception (44) est en outre agencé pour recevoir les données D2D selon le nombre déterminé d'occurrences de transmission,
dans lequel le second module de détermination (42) est agencé pour déterminer le nombre d'occurrences de transmission des données D2D selon un indice d'un modèle de ressources pour la transmission des données D2D ou un modèle de ressources pour la transmission des données D2D ;
lorsque le nombre d'occurrences de transmission des données D2D est déterminé au moins selon l'indice du modèle de ressources pour la transmission des données D2D, le second module de réception (44) est en outre agencé pour recevoir l'indice du modèle de ressources pour la transmission des données D2D, dans lequel les positions de sous-trame des ressources de transmission sont représentées par un modèle de ressources pour la transmission, un modèle de ressources pour la transmission correspond à plus d'une valeur d'indice et différentes valeurs d'indice correspondent à différentes valeurs pour le nombre d'occurrences de transmission ; ou prédéfinir une pluralité d'ensembles de modèles de ressources pour la transmission, dans lequel chaque ensemble de modèles de ressources pour la transmission correspond à une valeur pour le nombre d'occurrences de transmission et les modèles de ressources pour la transmission compris dans différents ensembles de modèles de ressources pour la transmission sont indiqués par différents indices ;
ou,
lorsque le nombre d'occurrences de transmission des données D2D est déterminé au moins selon le modèle de ressources pour la transmission des données D2D, le second module de réception (44) est en outre agencé pour recevoir une signalisation pour indiquer l'indice du modèle de ressources pour la transmission des données D2D, dans lequel chaque modèle de ressources pour la transmission correspond à une valeur pour le nombre d'occurrences de transmission et chaque modèle de ressources pour la transmission correspond à une valeur d'indice.

10. Appareil selon la revendication 9, dans lequel
lorsqu'une sous-trame dans le premier ensemble de ressources ou une sous-trame pour transmettre les informations de commande D2D est chevauchée par une sous-trame dans la ressource de données, seules les données D2D sont reçues dans la sous-trame chevauchée ; ou,
lorsqu'une sous-trame dans le premier ensemble de ressources ou une sous-trame pour transmettre les informations de commande D2D est chevauchée par une sous-trame dans la ressource de données, seules les informations de commande D2D sont reçues dans la sous-trame chevauchée ; ou,
lorsqu'une sous-trame dans le premier ensemble de ressources ou une sous-trame pour transmettre les informations de commande D2D est chevauchée par une sous-trame dans la ressource de données et dans la sous-trame chevauchée, une ressource de domaine-fréquence du premier ensemble de ressources est chevauchée en position par une ressource de domaine-fréquence de la ressource de données, seules les données D2D sont reçues dans la sous-trame chevauchée ; ou,
lorsqu'une sous-trame dans le premier ensemble de ressources ou une sous-trame pour transmettre les informations de commande D2D est chevauchée par une sous-trame dans la ressource de données et dans la sous-trame chevauchée, une ressource de domaine-fréquence du premier ensemble de ressources est chevauchée en position par une ressource de domaine-fréquence de la ressource de données, seules les informations de commande D2D sont reçues dans la sous-trame chevauchée ; ou,
lorsqu'une sous-trame dans le premier ensemble de ressources ou une sous-trame pour transmettre les informations de commande D2D est chevauchée par une sous-trame dans la ressource de données et dans la sous-trame chevauchée, une ressource de domaine-fréquence du premier ensemble de ressources est orthogonale en position à une ressource de domaine-fréquence de la ressource de données, les informations de commande D2D et les données D2D sont toutes deux reçues dans la sous-trame chevauchée.
